(19) **Europäisches Patentamt / European Patent Office / Office européen des brevets**

(11) **EP 3 415 883 B1**

(12) **EUROPEAN PATENT SPECIFICATION**

(45) Date of publication and mention
of the grant of the patent:
**28.08.2024 Bulletin 2024/35**

(21) Application number: **17756432.5**

(22) Date of filing: **20.02.2017**

(51) International Patent Classification (IPC):
**G01J 3/51** (2006.01)     **G01J 3/02** (2006.01)
**G01J 3/28** (2006.01)     **G01J 3/50** (2006.01)
**G01J 3/46** (2006.01)

(52) Cooperative Patent Classification (CPC):
**G01J 3/51; G01J 3/027; G01J 3/0297; G01J 3/28;
G01J 3/465; G01J 3/502; G01J 3/506**

(86) International application number:
**PCT/JP2017/006167**

(87) International publication number:
**WO 2017/145994 (31.08.2017 Gazette 2017/35)**

(54) **TWO-DIMENSIONAL COLORIMETRIC DEVICE, TWO-DIMENSIONAL COLORIMETRIC SYSTEM, AND TWO-DIMENSIONAL COLORIMETRIC METHOD**

ZWEIDIMENSIONALE KOLORIMETRISCHE VORRICHTUNG, ZWEIDIMENSIONALES KOLORIMETRISCHES SYSTEM UND ZWEIDIMENSIONALES KOLORIMETRISCHES VERFAHREN

DISPOSITIF COLORIMÉTRIQUE BIDIMENSIONNEL, SYSTÈME COLORIMÉTRIQUE BIDIMENSIONNEL ET PROCÉDÉ COLORIMÉTRIQUE BIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2016 JP 2016033122**

(43) Date of publication of application:
**19.12.2018 Bulletin 2018/51**

(73) Proprietor: **Konica Minolta, Inc.
Tokyo 100-7015 (JP)**

(72) Inventors:
• **OHMORI, Shigeto
Tokyo 100-7015 (JP)**

• **MATSUURA, Hiroya
Tokyo 100-7015 (JP)**

(74) Representative: **Hoffmann Eitle
Patent- und Rechtsanwälte PartmbB
Arabellastraße 30
81925 München (DE)**

(56) References cited:
WO-A1-2010/021258     WO-A1-2010/021258
WO-A1-2015/182571     WO-A1-2015/182571
JP-A- 2002 267 574     JP-A- 2007 093 477
JP-A- 2007 093 477     JP-A- 2008 513 968
JP-A- 2010 139 324     JP-A- 2012 163 486
JP-B2- 4 371 243     US-A1- 2011 227 964
US-A1- 2014 300 753     US-B1- 6 577 775

## Description

### Technical Field

The present invention relates to a technology for color measurement of a two-dimensional light-emitting region such as a display screen, for example.

### Background Art

There are two types of color measurement devices, one type performing color measurement of a single measurement point (spot photometry-type colorimeters) and the other type performing color measurement of multiple measurement points simultaneously (two-dimensional color measurement devices).

Two-dimensional color measurement devices are used, for example, for color measurement of two-dimensional light-emitting regions for being capable of performing color measurement of multiple measurement points simultaneously. For example, screens of displays such as liquid crystal displays and organic electroluminescence displays are two-dimensional light-emitting regions.

A two-dimensional color measurement device executes color measurement of a screen of a display in the following manner, for example. In a state in which chromaticity and luminance are made the same over the entirety of the screen of the display, the luminance of the entire screen is changed in stages, and the two-dimensional color measurement device performs color measurement of the display screen at each stage. Then, the chromaticity is changed, and color measurement is performed in a similar manner.

Two-dimensional color measurement devices are capable of performing color measurement of multiple measurement points simultaneously. Thus, when there are a plurality of measurement points, color measurement time can be made shorter with two-dimensional color measurement devices than with spot photometry-type colorimeters. Color measurement accuracy of two-dimensional color measurement devices, however, is inferior to that of spot photometry-type colorimeters. In order to compensate for this shortcoming, proposals (for example, refer to Patent Literatures 1 and 2) are being made of a technology for correcting tristimulus values of each of a plurality of measurement points, which have been acquired by using a two-dimensional color measurement device, by using tristimulus values of a measurement point, which have been acquired by using a spot photometry-type colorimeter.

With two-dimensional color measurement devices and spot photometry-type colorimeters, color measurement time becomes long when the luminance of a two-dimensional light-emitting region is low because the amount of light that light-receiving parts of the two-dimensional color measurement devices and light-receiving parts of the spot photometry-type colorimeters receive from the two-dimensional light-emitting region decreases. In particular, in the technology disclosed in Patent Literature 1, light from a two-dimensional light-emitting region is split into two parts, one of which is received by a light-receiving element (the light-receiving part of a two-dimensional color measurement device) and the other of which is received by a spectroscopic sensor (the light-receiving part of a spot photometry-type colorimeter). Due to this, the amount of light that the light-receiving part of the two-dimensional color measurement device and the light-receiving part of the spot photometry-type colorimeter can each receive decreases to a further extent and color measurement time at low luminance becomes even longer.

Patent Literature 3 relates to an optical characteristic measurement device and method involving spectrally separating and measuring light to be measured by a first and a second spectrometric unit that have different accuracies, and calculating a certain optical characteristic of the light to be measured on the basis of the first and second spectrometric results.

Patent Literature 4 relates to a spectro-colorimeter system for imaging pipeline, the system including a camera system; a spectrometer system; and a controller coupling the camera system and the spectrometer system. The camera system is configured to provide a color image with the first portion of the incident light and to provide a tristimulus signal from the second portion of the incident light.

Patent Literature 5 relates to an imaging apparatus comprising an image pickup element and a colorimeter, an optical component at a predetermined position in an optical image branched by a light branching mirror is measured by the colorimeter and a branching direction in the light branching mirror is adjusted, thereby adjusting a colorimetric position.

Patent Literature 6 relates to a colorimeter which comprises a plurality of probe units and a body unit made capable of controlling the colorimetric actions of the probe units (P) and mounting and demounting the probe units. These probe units are composed of a spectroscopic probe unit and stimulation value direct-reading probe units. On the basis of the measurement result of the spectroscopic probe unit, therefore, the colorimeter thus constituted can calibrate the stimulation value of direct-reading probe units easily.

**Citation List**

**Patent Literature**

Patent Literature 1: JP 3246021 B2
Patent Literature 2: JP 4800591 B2
Patent Literature 3: WO 2015/182571 A1
Patent Literature 4: US 2014/300753 A1
Patent Literature 5: JP 4 371243 B2
Patent Literature 6: WO 2010/021258 A1

**Summary of Invention**

The present invention aims to provide a two-dimensional color measurement device, a two-dimensional color measurement system, and a two-dimensional color measurement method that are capable of ensuring that color measurement time at low luminance does not increase, in a case in which color measurement is performed with respect to a two-dimensional light-emitting region while changing the luminance.

A two-dimensional color measurement device that relates to a first aspect of the present invention and achieves the above-described aim includes: an imaging unit; an optical sensor unit; a first calculation unit; a second calculation unit; a determination unit; a storage unit; and a correction unit. The imaging unit includes a two-dimensional imaging element and takes a color image of a light-emitting region that is two-dimensional and is a measurement target. The optical sensor unit receives light from a predetermined measurement point included in the light-emitting region and outputs a signal indicating a color of the predetermined measurement point. The first calculation unit uses a signal indicating the color image of the light-emitting region to calculate tristimulus values of each of a plurality of measurement points included in the light-emitting region, the signal indicating the color image of the light-emitting region being output from the imaging unit. The second calculation unit uses the signal indicating the color of the predetermined measurement point to calculate tristimulus values of the predetermined measurement point, the signal indicating the color of the predetermined measurement point being output from the optical sensor unit. The determination unit makes a distinction between a bright state of the light-emitting region and a dark state of the light-emitting region by using, as a yardstick, a case in which an index value indicating a brightness of the light-emitting region equals a predetermined value, and uses the index value to determine whether the light-emitting region is in the bright state or the dark state. The storage unit stores in advance a predetermined correction coefficient. The correction unit executes a first correction when the determination unit determines that the light-emitting region is in the bright state and executes a second correction when the determination unit determines that the light-emitting region is in the dark state, the first correction being a correction in which the tristimulus values of each of the plurality of measurement points, which have been calculated by the first calculation unit, are corrected by using the tristimulus values of the predetermined measurement point, which have been calculated by the second calculation unit, the second correction being a correction in which the tristimulus values of each of the plurality of measurement points, which have been calculated by the first calculation unit, are corrected by using the correction coefficient stored in the storage unit.

These and other objects, features, and advantages of the present invention will become more apparent from the following detailed description of the present invention when taken in conjunction with the accompanying drawings.

**Brief Description of Drawings**

FIG. 1 is a schematic diagram of a two-dimensional color measurement device according to a present embodiment.
FIG. 2 is a block diagram illustrating a configuration of the two-dimensional color measurement device according to the present embodiment.
FIG. 3 is a plan view of a screen of a liquid crystal display.
FIG. 4 is an explanatory drawing for describing one example of a look-up table indicating the relationship between initial values of correction coefficients and exposure time.
FIG. 5 is an explanatory drawing for describing one example of a look-up table indicating the relationship between initial values of correction coefficients and luminance.
FIG. 6 is a graph expressing one example of formula 18 indicating the relationship between a11 (one element constituting a correction coefficient) and luminance.

FIG. 7 is a graph in which a11-1 has been added to the graph shown in FIG. 6.

FIG. 8 is a graph in which a curve corresponding to recalculated formula 18 has been added to the graph shown in FIG. 7.

FIG. 9 is a graph schematically describing the relationship between recalculation of formula 18, output from an imaging unit, and output from an optical sensor unit.

FIG. 10 is an explanatory drawing for describing one example of a look-up table indicating the relationship between updated values of correction coefficients and exposure time.

FIG. 11 is an explanatory drawing for describing one example of a look-up table indicating the relationship between updated values of correction coefficients and luminance.

FIG. 12 is a flowchart for describing a first example of operations of the two-dimensional color measurement device according to the present embodiment.

FIG. 13 is an explanatory drawing for describing another example of a look-up table indicating the relationship between updated values of correction coefficients and exposure time.

FIG. 14 is a flowchart for describing a second example of operations of the two-dimensional color measurement device according to the present embodiment.

FIG. 15 is an explanatory drawing for describing one example of a look-up table indicating the relationships between initial values of correction coefficients and exposure time, set in accordance with screen light sources.

FIG. 16 is an explanatory drawing for describing one example of a look-up table indicating the relationships between initial values of correction coefficients and luminance, set in accordance with screen light sources.

FIG. 17 is an explanatory drawing for describing one example of a look-up table indicating the relationships between initial values of correction coefficients and exposure time, set in accordance with distance.

FIG. 18 is an explanatory drawing for describing one example of a look-up table indicating the relationships between initial values of correction coefficients and luminance, set in accordance with distance.

Description of Embodiment

[Table 1]

| Brightness of two-dimensional light-emitting region | |
|---|---|
| Bright state | Correct tristimulus values acquired by using imaging unit with tristimulus values acquired by using optical sensor unit (first correction)<br><br>Update correction coefficient |
| Dark state | Correct tristimulus values acquired by using imaging unit with correction coefficient (second correction) |

One feature of the present embodiment will be described by using the table above. The brightness of a two-dimensional light-emitting region that is the measurement target is decreased in stages from a bright state to a dark state, and color measurement of the two-dimensional light-emitting region is performed at each stage by using a two-dimensional color measurement device. The color measurement performed at each stage is one round of color measurement. The present embodiment is based on color measurement performed in such a manner.

A distinction is made between a bright state and a dark state of the two-dimensional light-emitting region by using a predetermined value of the brightness of the two-dimensional light-emitting region as a yardstick. The two-dimensional color measurement device, when determining that the light-emitting region is in the bright state, corrects tristimulus values of each of a plurality of measurement points, which have been acquired by using an imaging unit, by using tristimulus values of a predetermined measurement point, which have been acquired by using an optical sensor unit (first correction), and also updates a correction coefficient. Meanwhile, the two-dimensional color measurement device, when determining that the light-emitting region is in the dark state, corrects the tristimulus values of each of the plurality of measurement points, which have been acquired by using the imaging unit, by using a correction coefficient (second correction). Note that the update of a correction coefficient is not always necessary.

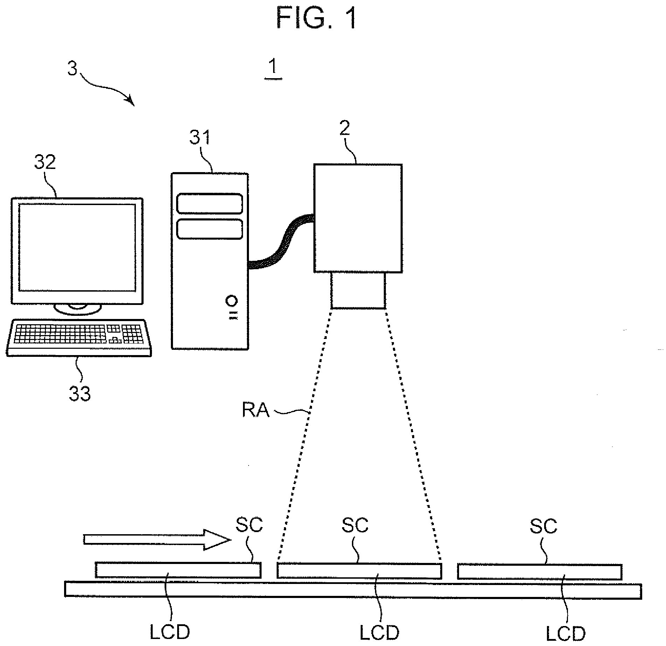

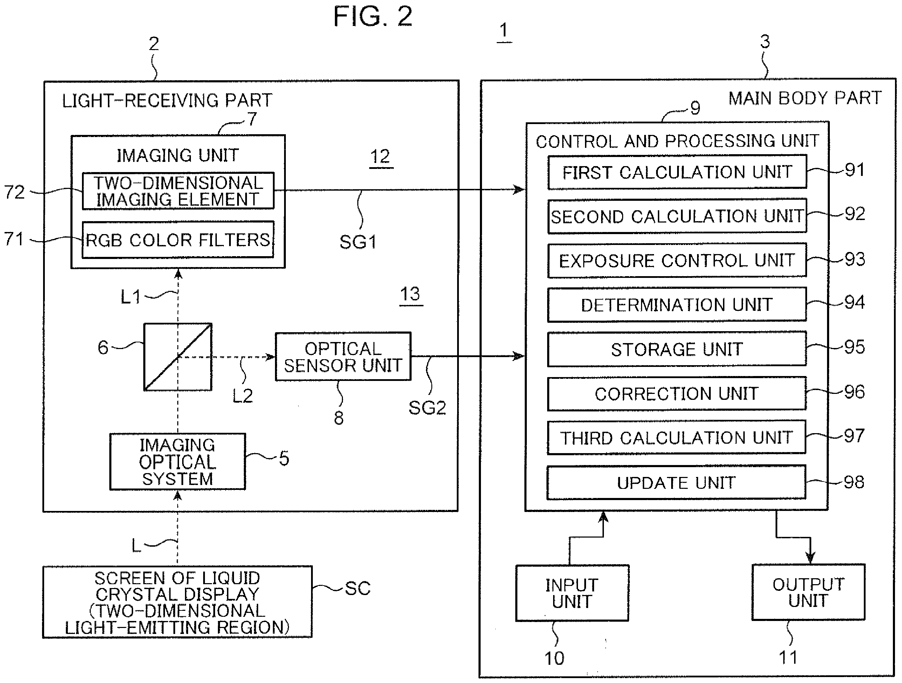

In the following, an embodiment of the present invention is described in detail on the basis of the drawings. FIG. 1 is a schematic diagram of a two-dimensional color measurement device 1 according to the present embodiment. FIG. 2 is a block diagram illustrating a configuration of the two-dimensional color measurement device 1.

With reference to FIGS. 1 and 2, the measurement target of the two-dimensional color measurement device 1 is a two-dimensional light-emitting region. The entirety of a screen SC of a liquid crystal display or a partial region of a screen SC are examples of the two-dimensional light-emitting region, and in the present embodiment, description is provided regarding the entirety of a screen SC as the two-dimensional light-emitting region. The two-dimensional color measurement device 1 measures the luminance of a screen SC of a liquid crystal display and a characteristic (for example, chromaticity) related to the color of the screen SC.

The two-dimensional color measurement device 1 includes a light-receiving part 2 and a main body part 3. A liquid crystal display having a screen SC oriented toward the light-receiving part 2 is conveyed to an imaging region RA of the light-receiving part 2 by a conveyance means that is not illustrated, and at this position, the two-dimensional color measurement device 1 measures the chromaticity, the luminance, and the like of the screen SC.

With reference to FIG. 2, the light-receiving part 2 includes an imaging optical system 5, a beam splitter 6, an imaging unit 7, and an optical sensor unit 8.

The imaging optical system 5 includes an optical lens and performs focusing of light L from the entirety of the screen SC. The screen SC is in a state in which the entirety thereof is emitting light of a predetermined color (for example, red).

The beam splitter 6 (one example of an optical splitting unit) splits the focused light into two. To provide detailed description, the beam splitter 6 allows a part of the focused light described above to pass therethrough and reflects the rest of the focused light. The light having passed through the beam splitter 6 is referred to as light L1 and the light having been reflected by the beam splitter 6 is referred to as light L2. The beam splitter 6, for example, allows 10 percent of the focused light to pass therethrough and reflects 90 percent of the focused light.

The imaging unit 7 is disposed along the optical path of the light L1. The imaging unit 7 includes color filters 71 and a two-dimensional imaging element 72. The color filters 71 are constituted of: a filter that allows the R component to pass therethrough; a filter that allows the G component to pass therethrough; and a filter that allows the B component to pass therethrough.

The two-dimensional imaging element 72 is a charge-coupled device (CCD), for example, and is an optical sensor having the measurement range as a two-dimensional region. The two-dimensional imaging element 72 receives the light L1 through the color filters 71, and thereby takes a color image of the entirety of the screen SC and outputs an electric signal indicating the color image having been taken. This electric signal constitutes a signal SG1 output by the light-receiving part 2.

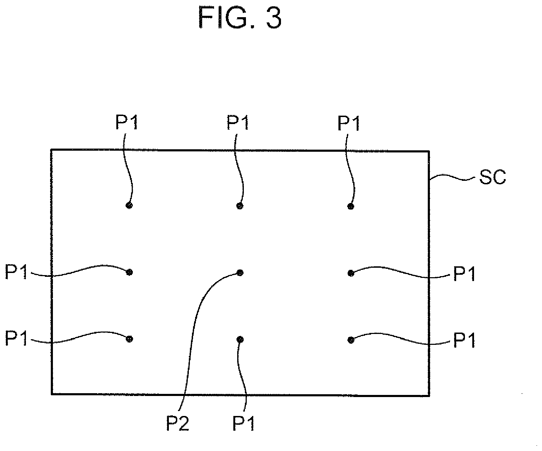

The optical sensor unit 8 is disposed along the optical path of the light L2. FIG. 3 is a plan view of the screen SC. With reference to FIGS. 2 and 3, the optical sensor unit 8 receives the light L2 from a predetermined measurement point P2 on the screen SC, and outputs an electric signal indicating the color of the predetermined measurement point P2. This electric signal constitutes a signal SG2 output by the light-receiving part 2. The predetermined measurement point P2 is referred to as a "spot region" and is included in the screen SC. The spot region corresponds to an angular field of 0.1 to 3 degrees, for example, and is smaller than the screen SC. The predetermined measurement point P2 is, for example, set at the center of the screen SC.

The optical sensor unit 8 is used to perform color measurement with higher accuracy than color measurement using the imaging unit 7. Due to this, a color sensor that has color filters equivalent to the color matching functions of the XYZ colorimetric system is used as the optical sensor unit 8. Note that a spectroscopic sensor may be used as the optical sensor unit 8. For the light L2 incident thereon, the spectroscopic sensor generates an electric signal representing the intensity levels of wavelengths. A polychromator, in which a diffraction grating is used, is an example of the spectroscopic sensor.

With reference to FIGS. 1 and 2, the main body part 3 is constituted of a personal computer main body 31, a display 32, and a keyboard 33, and includes a control and processing unit 9, an input unit 10, and an output unit 11 as functional blocks.

The control and processing unit 9 is a microcomputer realized by using a central processing unit (CPU), a random access memory (RAM), a read-only memory (ROM), and the like.

The input unit 10 is a device for inputting, to the two-dimensional color measurement device 1, commands (instructions), data, etc., from the outside, and is realized by using the keyboard 33. Note that a touch panel may be used as the input unit 10. The output unit 11 is a device for outputting commands and data input from the input unit 10 and calculation results of the control and processing unit 9, etc., and is realized by using the display 32. Note that a printing device such as a printer may be used as the output unit 11. The control and processing unit 9 is housed inside the personal computer main body 31.

The light-receiving part 2 and the main body part 3 each have a connection terminal (not illustrated), and wired connection is established between the light-receiving part 2 and the main body part 3 by using these connection terminals. Note that wireless connection may be established between the light-receiving part 2 and the main body part 3. The light-receiving part 2 and the main body part 3, by using the wired or wireless connection, performs communication compliant with a communication standard enabling high-speed communication (for example, industrial Local Area Network (LAN)). The signal SG1, which indicates the color image of the screen SC taken by the imaging unit 7, and the signal SG2, which is output from the optical sensor unit 8 and indicates the color of the predetermined measurement point P2, are transmitted from the light-receiving part 2 to the main body part 3 over this communication.

With reference to FIG. 2, description is provided of the control and processing unit 9. The control and processing unit 9 includes, as functional blocks: a first calculation unit 91; a second calculation unit 92; an exposure control unit 93; a determination unit 94; a storage unit 95; a correction unit 96; a third calculation unit 97; and an update unit 98.

The first calculation unit 91 uses the signal SG1 indicating the color image of the entire screen SC, which is output from the imaging unit 7, to calculate tristimulus values of each of a plurality of measurement points included in the screen SC. The first calculation unit 91 calculates tristimulus values of each of a plurality of measurement points P1 set on the screen SC as illustrated in FIG. 3, for example. The operator of the two-dimensional color measurement device 1 operates the input unit 10 to set the plurality of measurement points P1 on the screen SC. It can be said that the plurality of measurement points P1 are a plurality of pixels selected in advance from among all pixels constituting the color image of the entirety of the screen SC by the operator of the two-dimensional color measurement device 1 operating the input unit 10. Note that each and every pixel constituting the color image of the entirety of the screen SC may be a measurement point P1. Hence, the plurality of measurement points P1 may be a plurality of pixels selected from among all pixels constituting the color image of the entirety of the screen SC or may be all pixels constituting the color image of the entirety of the screen SC.

The second calculation unit 92 uses the signal SG2 indicating the color of the predetermined measurement point P2, which is output from the optical sensor unit 8, to calculate tristimulus values of the predetermined measurement point P2. The signal SG2 is constituted of the X, Y, and Z signals indicating the XYZ colorimetric system. The Y signal is a luminance signal and indicates the luminance of the predetermined measurement point P2. The second calculation unit 92 uses the Y signal and calculates the luminance of the predetermined measurement point P2.

The exposure control unit 93 controls the exposure time when the imaging unit 7 takes the color image of the entirety of the screen SC. The exposure control unit 93 makes the exposure time short when the screen SC is bright and makes the exposure time long when the screen SC is dark. In a state in which the imaging unit 7 is taking the color image of the entirety of the screen SC and is outputting the signal SG1 indicating the color image, the exposure control unit 93 chronologically adds up values indicating luminance included in the signal SG1 and stops the exposure when the sum reaches a predetermined value. The sum reaches the predetermined value quickly (that is, the exposure time is short) when the screen SC is bright, and the sum reaches the predetermined value slowly (that is, the exposure time is long) when the screen SC is dark. The exposure control unit 93 measures the exposure time from the start to the end of the exposure. This exposure time is used by the determination unit 94, which will be described next.

As described up to this point, the imaging unit 7, the first calculation unit 91, and the exposure control unit 93 constitute a two-dimensional color measurement unit 12. The two-dimensional color measurement unit 12 performs simultaneous color measurement of the plurality of measurement points P1 included in the screen SC. The optical sensor unit 8 and the second calculation unit 92 constitute a spot color measurement unit 13. The spot color measurement unit 13 performs color measurement of the predetermined measurement point P2 in the screen SC.

In a state in which the chromaticity of the entirety of the screen SC is fixed at a certain chromaticity, the luminance of the entirety of the screen SC is decreased in stages from a high value to a low value, and the two-dimensional color measurement device 1 performs color measurement of the screen SC at each stage. In this color measurement, the determination unit 94 makes a distinction between the bright state, which indicates a state in which the screen SC is bright, and the dark state, which indicates a state in which the screen SC is dark, by using as a yardstick a case in which an index value indicating the brightness of the screen SC equals a predetermined value, and determines whether the screen SC is in the bright state or the dark state by using the index value.

Exposure time and luminance are examples of indices of the brightness of the screen SC. The exposure time here refers to the exposure time when the imaging unit 7 takes the color image of the entirety of the screen SC. The luminance here refers to the luminance of the predetermined measurement point P2, which is calculated by using the signal SG2 that is output from the optical sensor unit 8 and indicates the color of the predetermined measurement point P2.

Description is provided of exposure time. As described above, the exposure control unit 93 measures the exposure time. The exposure time is short when the screen SC is bright and is long when the screen SC is dark. Accordingly, the determination unit 94 determines that the screen SC is in the bright state when the exposure time is equal to or shorter than a predetermined value and determines that the screen SC is in the dark state when the exposure time is longer than the predetermined value.

Description is provided of luminance. The luminance of the predetermined measurement point P2 is high when the screen SC is bright and is low when the screen SC is dark. Accordingly, the determination unit 94 determines that the screen SC is in the bright state when the luminance of the predetermined measurement point P2 is equal to or higher than a predetermined value, and determines that the screen SC is in the dark state when the luminance of the predetermined measurement point P2 is lower than the predetermined value.

The storage unit 95 has predetermined correction coefficients stored therein in advance. The correction coefficients will be described in the description regarding the correction unit 96.

The correction unit 96 executes the first correction when the determination unit 94 has determined that the screen SC is in the bright state and executes the second correction when the determination unit 94 has determined that the screen SC is in the dark state. In the first correction, the correction unit 96 corrects the tristimulus values of each of the plurality of measurement points P1, which have been calculated by the first calculation unit 91, by using the tristimulus values of the predetermined measurement point P2 (FIG. 3), which have been calculated by the second calculation unit 92. In the second correction, the correction unit 96 corrects the tristimulus values of each of the plurality of measurement points P1, which have been calculated by the first calculation unit 91, by using a correction coefficient stored in the storage unit 95.

The tristimulus values indicating the color of the predetermined measurement point P2, which are measured by using the optical sensor unit 8, are real values. Accordingly, the color measurement using the spot color measurement unit 13 (that is, the color measurement using the optical sensor unit 8) has higher color measurement accuracy than the color measurement using the two-dimensional color measurement unit 12 (that is, the color measurement using the imaging unit 7). In the first correction, for each of the plurality of measurement points P1, the tristimulus values indicating the color of the measurement point P1 is corrected by using the tristimulus values (real values) indicating the color of the predetermined measurement point P2. Accordingly, for each of the plurality of measurement points P1, the accuracy of the tristimulus values indicating the color of the measurement point P1 can be enhanced. Patent Literature 1 described above describes in detail a correction similar to this first correction.

The correction unit 96 executes the first correction when the screen SC is in the bright state. When the screen SC becomes dark (in other words, when the luminance of the screen SC decreases), the amount of light that the optical sensor unit 8 receives decreases and thus the color measurement time increases. Further, while the color measurement using the spot color measurement unit 13 has higher color measurement accuracy than the color measurement using the two-dimensional color measurement unit 12, the color measurement accuracy of the color measurement using the spot color measurement unit 13 decreases when the screen SC becomes dark. In view of this, the correction unit 96 executes the second correction when the screen SC is in the dark state. In the second correction, the color measurement using the optical sensor unit 8 is not performed and the tristimulus values of each of the plurality of measurement points P1, which have been calculated by the first calculation unit 91, are corrected by using a correction coefficient (second correction). Accordingly, it can be ensured that color measurement time does not increase even in a state in which the luminance of the screen SC is low.

As described up to this point, with the two-dimensional color measurement device 1 according to the present embodiment, it can be ensured that color measurement time at low luminance does not increase, in a case in which color measurement is performed with respect to the screen SC (the two-dimensional light-emitting region) while changing the luminance.

Detailed description is provided regarding correction coefficients. The color filters 71 are not equivalent to the color matching functions. Accordingly, formula 1 holds true when color measurement of a light emission W is performed by using the two-dimensional color measurement unit 12, which includes the imaging unit 7.

[Math 1]

$$\begin{pmatrix} CX_w \\ CY_w \\ CZ_w \end{pmatrix} = \begin{pmatrix} CX_r & CX_g & CX_b \\ CY_r & CY_g & CY_b \\ CZ_r & CZ_g & CZ_b \end{pmatrix} \cdot \begin{pmatrix} R \\ G \\ B \end{pmatrix} \quad \cdots \text{Formula 1}$$

R, G, and B are the R value, the G value, and the B value of the light emission W.

CXw, CYw, and CZw are the X value, the Y value, and the Z value of the light emission W acquired by the two-dimensional color measurement unit 12.

CXr, CYr, and CZr are the X value, the Y value, and the Z value when an R component value that is a value indicated by an R signal (a signal generated from light having passed through the R filter) output from the imaging unit 7 of the two-dimensional color measurement unit 12 is expressed by using the XYZ colorimetric system. CXg, CYg, CZg are the X value, the Y value, and the Z value when a G component value that is a value indicated by a G signal (a signal generated from light having passed through the G filter) output from the imaging unit 7 is expressed by using the XYZ colorimetric system. CXb, CYb, CZb are the X value, the Y value, and the Z value when a B component value that is a value indicated by a B signal (a signal generated from light having passed through the B filter) output from the imaging unit 7 is expressed by using the XYZ colorimetric system. CXr, CYr, CZr, CXg, CYg, CZg, CXb, CYb, and CZb are calculated by the first calculation unit 91.

From formula 1, the R value, the G value, and the B value of the light emission W can be expressed by formula 2.
[Math 2]

$$\begin{pmatrix} R \\ G \\ B \end{pmatrix} = \begin{pmatrix} CX_r & CX_g & CX_b \\ CY_r & CY_g & CY_b \\ CZ_r & CZ_g & CZ_b \end{pmatrix}^{-1} \cdot \begin{pmatrix} CX_w \\ CY_w \\ CZ_w \end{pmatrix} \cdots \text{Formula 2}$$

The optical sensor unit 8 has color filters that are equivalent to the color matching functions. Accordingly, formula 3 holds true when color measurement of the light emission W is performed by using the spot color measurement unit 13.
[Math 3]

$$\begin{pmatrix} X_w \\ Y_w \\ Z_w \end{pmatrix} = \begin{pmatrix} X_r & X_g & X_b \\ Y_r & Y_g & Y_b \\ Z_r & Z_g & Z_b \end{pmatrix} \cdot \begin{pmatrix} R \\ G \\ B \end{pmatrix} \cdots \text{Formula 3}$$

Xw, Yw, and Zw are the X value, the Y value, and the Z value (the real values of tristimulus values) of the light emission W acquired by the spot color measurement unit 13.

Xr, Yr, and Zr are the X value, the Y value, and the Z value (the real values of tristimulus values) when an R component value of the light emission W, which is acquired by the spot color measurement unit 13, is expressed by using the XYZ colorimetric system. Xg, Yg, and Zg are the X value, the Y value, and the Z value (the real values of tristimulus values) when a G component value of the light emission W, which is acquired by the spot color measurement unit 13, is expressed by using the XYZ colorimetric system. Xb, Yb, and Zb are the X value, the Y value, and the Z value (the real values of tristimulus values) when a B component value of the light emission W, which is acquired by the spot color measurement unit 13, is expressed by using the XYZ colorimetric system.

Formula 4 is yielded by substituting formula 2 into formula 3.
[Math 4]

$$\begin{pmatrix} X_w \\ Y_w \\ Z_w \end{pmatrix} = \begin{pmatrix} X_r & X_g & X_b \\ Y_r & Y_g & Y_b \\ Z_r & Z_g & Z_b \end{pmatrix} \cdot \begin{pmatrix} CX_r & CX_g & CX_b \\ CY_r & CY_g & CY_b \\ CZ_r & CZ_g & CZ_b \end{pmatrix}^{-1} \cdot \begin{pmatrix} CX_w \\ CY_w \\ CZ_w \end{pmatrix} \cdots \text{Formula 4}$$

Formula 5, which is included in formula 4, is a correction coefficient.
[Math 5]

$$\text{Correction coefficient} = \begin{pmatrix} X_r & X_g & X_b \\ Y_r & Y_g & Y_b \\ Z_r & Z_g & Z_b \end{pmatrix} \cdot \begin{pmatrix} CX_r & CX_g & CX_b \\ CY_r & CY_g & CY_b \\ CZ_r & CZ_g & CZ_b \end{pmatrix}^{-1} = \begin{pmatrix} a11 & a12 & a13 \\ a21 & a22 & a23 \\ a31 & a32 & a33 \end{pmatrix} \cdots \text{Formula 5}$$

As can be seen from Math formula 4, the real values (Xw, Yw, and Zw) of the tristimulus values can be calculated from the correction coefficient and the values CXw, CYw, and CZw, which are acquired by the two-dimensional color measurement unit 12.

Description is provided of a specific example of a correction coefficient. Xr, Yr, Zr, Xg, Yg, Zg, Xb, Yb, and Zb (referred to as Xr to Zb in the following) can be acquired by using the spot color measurement unit 13. CXr, CYr, CZr, CXg, CYg, CZg, CXb, CYb, and CZb (referred to as CXr to CZb in the following) can be acquired by using the two-dimensional color measurement unit 12.

For example, the correction coefficient would be as expressed by formula 8 when Xr to Zb acquired by the spot color measurement unit 13 are as shown in formula 6 and CXr to CZb acquired by the two-dimensional color measurement unit 12 are as shown in formula 7 for a given light emission W.

[Math 6]

$$\begin{pmatrix} X_r & X_g & X_b \\ Y_r & Y_g & Y_b \\ Z_r & Z_g & Z_b \end{pmatrix} = \begin{pmatrix} 155.49 & 146.99 & 85.04 \\ 81.05 & 292.99 & 32.08 \\ 6.52 & 47.06 & 437.83 \end{pmatrix} \cdots \text{Formula 6}$$

[Math 7]

$$\begin{pmatrix} CX_r & CX_g & CX_b \\ CY_r & CY_g & CY_b \\ CZ_r & CZ_g & CZ_b \end{pmatrix} = \begin{pmatrix} 3.088 & 26.093 & 62.753 \\ 23.961 & 99.960 & 15.911 \\ 58.745 & 12.106 & 3.8721 \end{pmatrix} \cdots \text{Formula 7}$$

[Math 8]

$$\begin{pmatrix} X_r & X_g & X_b \\ Y_r & Y_g & Y_b \\ Z_r & Z_g & Z_b \end{pmatrix} \cdot \begin{pmatrix} CX_r & CX_g & CX_b \\ CY_r & CY_g & CY_b \\ CZ_r & CZ_g & CZ_b \end{pmatrix}^{-1} = \begin{pmatrix} 0.980 & 0.947 & 2.209 \\ -0.254 & 2.976 & 0.179 \\ 7.333 & -1.483 & 0.331 \end{pmatrix} \cdots \text{Formula 8}$$

Xr to Zb and CXr to CZb are acquired in advance in accordance with index values (exposure time, luminance) of the brightness of the screen SC. The update unit 98 creates initial values of correction coefficients by using Xr to Zb and CXr to CZb having been acquired in advance, generates a look-up table in which the index values and the initial values of correction coefficients are associated, and causes the storage unit 95 to store the look-up table. Hence, the storage unit 95 has stored therein in advance a plurality of index values having different values from one another and a plurality of correction coefficients associated with the respective ones of the plurality of index values.

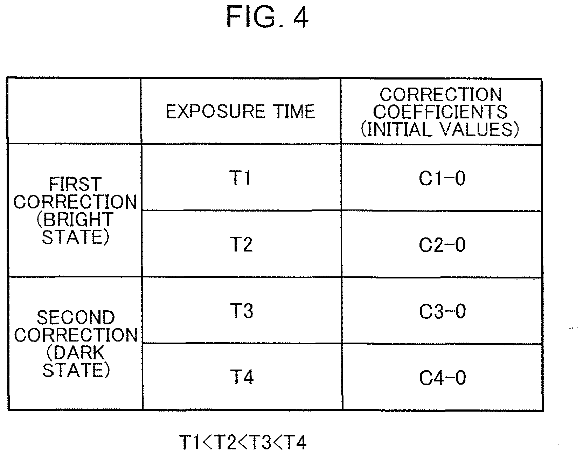

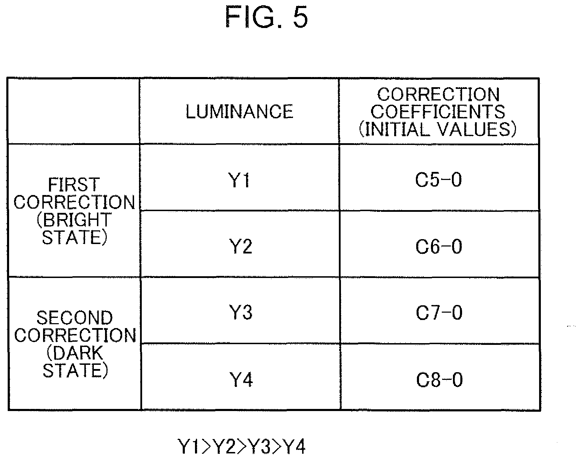

The update unit 98 creates a look-up table indicating the relationship between initial values of correction coefficients and exposure time, and a look-up table indicating the relationship between initial values of correction coefficients and luminance. The exposure time here refers to the exposure time when the imaging unit 7 takes the color image of the entirety of the screen SC, as already described above. The term "exposure time" has this meaning hereafter. The luminance here refers to the luminance of the predetermined measurement point P2, which has been calculated by using the signal SG2 that is output from the optical sensor unit 8 and indicates the color of the predetermined measurement point P2, as already described above. The term "luminance" has this meaning hereafter. FIG. 4 is an explanatory drawing for describing one example of a look-up table indicating the relationship between initial values of correction coefficients and exposure time. FIG. 5 is an explanatory drawing for describing one example of a look-up table indicating the relationship between initial values of correction coefficients and luminance. Description is provided taking a case in which the number of values of exposure time and luminance is four, but any number of values can be used as long as there are two or more values of exposure time and luminance.

With reference to FIG. 4, suppose that the relationship: T1 < T2 < T3 < T4 holds true for exposure time. The correction unit 96 executes the first correction when the exposure time is T1 or T2. The correction unit 96 executes the second correction when the exposure time is T3 or T4. As described above, the first correction is correction in which a correction coefficient is not used, and the second correction is correction in which a correction coefficient is used.

With reference to FIG. 5, suppose that the relationship: Y1 > Y2 > Y3 > Y4 holds true for luminance. The correction unit 96 executes the first correction when the luminance is Y 1 or Y2. The correction unit 96 executes the second correction when the luminance is Y3 or Y4.

When exposure time is used as the index value and the measured exposure time is T3, the correction unit 96 reads out the correction coefficient C3-0 corresponding to the exposure time T3 from the storage unit 95 and executes the second correction by using the correction coefficient C3-0. When the measured exposure time is T4, the correction unit 96 reads out the correction coefficient C4-0 corresponding to the exposure time T4 from the storage unit 95 and executes the second correction by using the correction coefficient C4-0. When luminance is used as the index value and the measured luminance is Y3, the correction unit 96 reads out the correction coefficient C7-0 corresponding to the luminance Y3 from the storage unit 95 and executes the second correction by using the correction coefficient C7-0. When the measured luminance is Y4, the correction unit 96 reads out the correction coefficient C8-0 corresponding to the luminance Y4 from the storage unit 95 and executes the second correction by using the correction coefficient C8-0. Hence, when the determination unit 94 determines that the screen SC is in the dark state, the correction unit 96 executes the second correction by using a correction coefficient associated with the index value having been used to perform the determination.

When the correction coefficient varies depending upon the level of the index value (exposure time, luminance), the accuracy of the second correction would decrease if there were only one correction coefficient. As described above, according to the present embodiment, the second correction is performed by using a correction coefficient that is allocated to correspond to the level of the index value. Due to this, the accuracy of the second correction does not decrease even in a case in which the correction coefficient varies depending upon the level of the index value.

With reference to FIG. 2, in the present embodiment, the light L1, which is one part of the light split in two at the beam splitter 6, is received by the imaging unit 7, and the light L2, which is the other part of the light split in two, is received by the optical sensor unit 8. Thus, the amount of light received by each of the imaging unit 7 and the optical sensor unit 8 becomes even smaller. Due to this, color measurement time becomes even longer when the luminance of the screen SC is low. Even with such a configuration, however, the present embodiment can ensure that color measurement time does not increase because the second correction is performed when the screen SC is in the dark state.

Description is provided regarding the update of correction coefficients. With reference to FIG. 2, the output from the imaging unit 7 and the optical sensor unit 8 changes in accordance with the temperature of the imaging unit 7 and the optical sensor unit 8. Due to this, the accuracy of the second correction would decrease if correction coefficients are fixed. Thus, there is a need of updating correction coefficients. In the present embodiment, the update unit 98 updates correction coefficients when the determination unit 94 determines that the screen SC is in the bright state in the process in which color measurement of the screen SC is being performed by using the two-dimensional color measurement device 1. The update of correction coefficients is constituted of Process 1 to Process 4.

(Process 1)

Formulas 9 to 26 below are given as predetermined formulas. As shown in formula 5, a11 to a33 are elements constituting a correction coefficient. Formulas 9 to 26, as a set, constitute calculation formulas for calculating updated values of correction coefficients.

Formula indicating relationship between a11 and exposure time ... Formula 9
Formula indicating relationship between a21 and exposure time ... Formula 10
Formula indicating relationship between a31 and exposure time ... Formula 11
Formula indicating relationship between a12 and exposure time ... Formula 12
Formula indicating relationship between a22 and exposure time ... Formula 13
Formula indicating relationship between a32 and exposure time ... Formula 14
Formula indicating relationship between a13 and exposure time ... Formula 15
Formula indicating relationship between a23 and exposure time ... Formula 16
Formula indicating relationship between a33 and exposure time ... Formula 17
Formula indicating relationship between a11 and luminance ... Formula 18
Formula indicating relationship between a21 and luminance ... Formula 19
Formula indicating relationship between a31 and luminance ... Formula 20

Formula indicating relationship between a12 and luminance ... Formula 21
Formula indicating relationship between a22 and luminance ... Formula 22
Formula indicating relationship between a32 and luminance ... Formula 23
Formula indicating relationship between a13 and luminance ... Formula 24
Formula indicating relationship between a23 and luminance ... Formula 25
Formula indicating relationship between a33 and luminance ... Formula 26

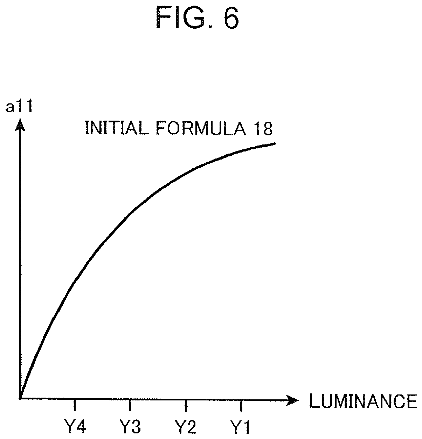

Detailed description is provided regarding the predetermined formulas by taking formula 18, which indicates the relationship between a11 and luminance, as an example. The update unit 98 refers to the table illustrated in FIG. 5 and for a11, calculates formula 18, which indicates the relationship between a11 and luminance, by using the value of a11 for luminance Y1, the value of a11 for luminance Y2, the value of a11 for luminance Y3, and the value of a11 for luminance Y4. The graph shown in FIG. 6 is yielded by expressing formula 18 in the form of a graph. In the graph, the horizontal axis indicates luminance and the vertical axis indicates the value of a11. This graph expresses formula 18 when correction coefficients have their initial values (initial formula 18).

The update unit 98 creates initial formulas 9 to 17 by using the look-up table indicating the relationship between initial values of correction coefficients and exposure time (FIG. 4). Further, the update unit 98 creates initial formulas 18 to 26 by using the look-up table indicating the relationship between initial values of correction coefficients and luminance (FIG. 5). The update unit 98 stores therein in advance the set of initial formulas 9 to 26 as initial ones of the above-described calculation formulas.

(Process 2)

As the basis of the update of correction coefficients, when the determination unit 94 determines that the screen SC is in the bright state, the third calculation unit 97 calculates the correction coefficient associated with the index value having been used to perform the determination. To provide detailed description, suppose that the determination unit 94 determines that the screen SC is in the bright state while color measurement is being performed with respect to the screen SC by the two-dimensional color measurement device 1 in a state in which the screen SC has a certain brightness level. In this color measurement, the two-dimensional color measurement unit 12 calculates CXr to CZb by using the signal indicating the color image of the screen SC, which is output from the imaging unit 7. Further, in this color measurement, the spot color measurement unit 13 calculates Xr to Zb by using the signal indicating the color of the predetermined measurement point P2, which is output from the optical sensor unit 8. The third calculation unit 97 calculates a correction coefficient by using Xr to Zb and CXr to CZb. This correction coefficient is referred to as correction coefficient C9 in the following. Further, suppose that luminance was the index value used when the screen SC was determined as being in the bright state, and that the value thereof was Y5. Accordingly, the correction coefficient C9 is a correction coefficient associated with luminance Y5.

(Process 3)

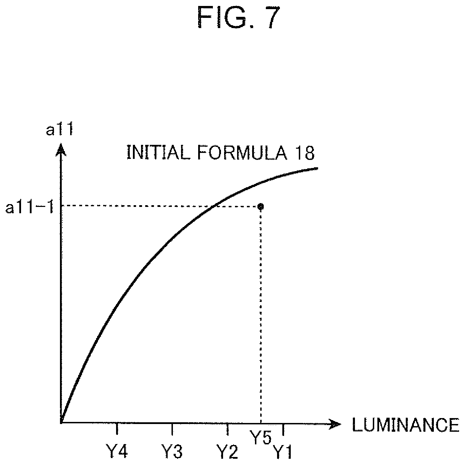

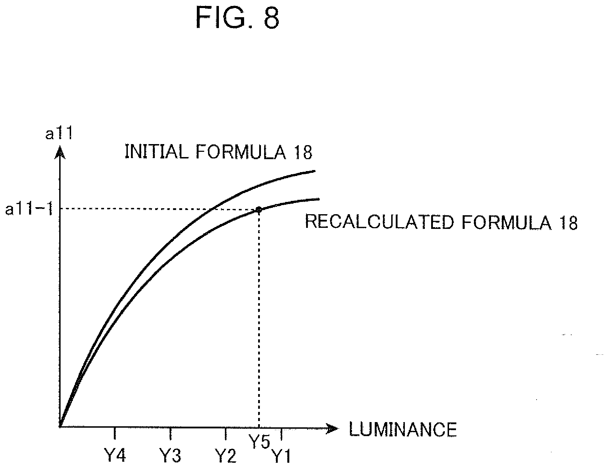

The update unit 98 uses a11 to a33 constituting the correction coefficient C9 to recalculate the respective ones of the calculation formulas (formulas 9 to 26) for calculating updated values of correction coefficients. Description is provided regarding this point by taking formula 18, which indicates the relationship between a11 and luminance, as an example. Suppose that a11 in the correction coefficient C9 is a11-1. FIG. 7 is a graph in which a11-1 has been added to the graph shown in FIG. 6. The update unit 98 uses a11-1 and the initial formula 18, which indicates the relationship between a11 and luminance, to recalculate formula 18, which indicates the relationship between a11 and luminance. FIG. 8 is a graph in which a curve corresponding to the recalculated formula 18 has been added to the graph shown in FIG. 7.

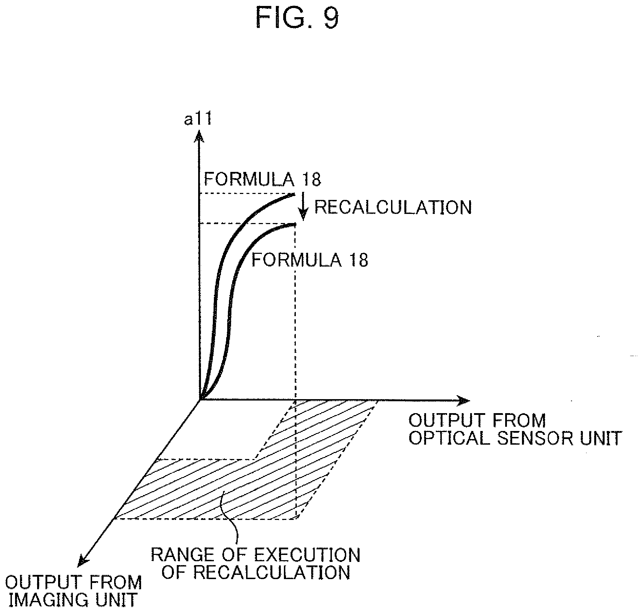

FIG. 9 is a graph schematically describing the relationship between the recalculation of formula 18, the output from the imaging unit 7, and the output from the optical sensor unit 8. The update unit 98 recalculates formula 18 when the output from the imaging unit 7 is equal to or greater than a predetermined value (in other words, when the exposure time is equal to or shorter than a predetermined value). The update unit 98 recalculates formula 18 when the output from the optical sensor unit 8 is equal to or greater than a predetermined value (in other words, when the luminance is equal to or higher than a predetermined value).

The update unit 98 similarly recalculates the above-described formulas 9 to 17 and 19 to 26, and stores the recalculated formulas 9 to 26 (that is, the recalculated calculation formulas) therein.

(Process 4)

The update unit 98 calculates correction coefficients corresponding to the exposure time values T1, T2, T3, T4 by using the recalculated formulas 9 to 17 (that is, the recalculated calculation formulas), uses the calculated correction coefficients as updated values of the correction coefficients, creates a look-up table in which the updated values of the correction coefficients and exposure time are associated, and causes the storage unit 95 to store this look-up table therein. Further, the update unit 98 calculates correction coefficients corresponding to the luminance values Y1, Y2, Y3, Y4 by using the recalculated formulas 18 to 26, uses the calculated correction coefficients as updated values of the correction coefficients, creates a look-up table in which the updated values of the correction coefficients and luminance are associated, and causes the storage unit 95 to store this look-up table therein. Correction coefficients are updated in such a manner.

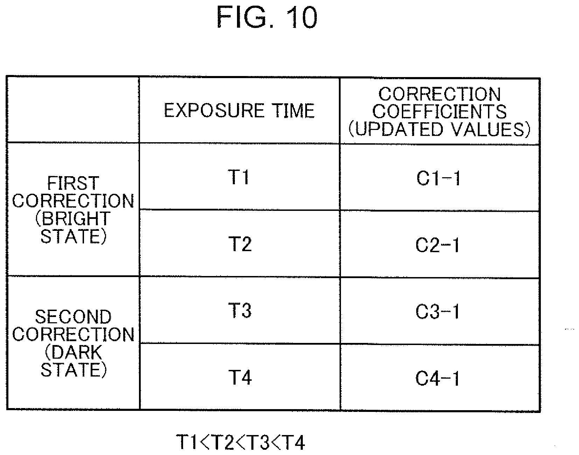

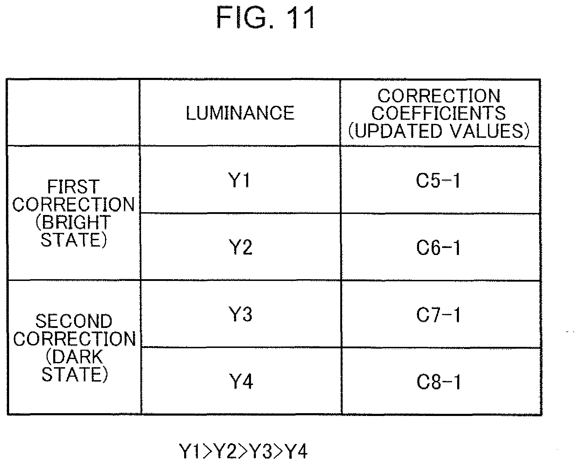

FIG. 10 is an explanatory drawing for describing one example of a look-up table indicating the relationship between updated values of correction coefficients and exposure time. FIG. 11 is an explanatory drawing for describing one example of a look-up table indicating the relationship between updated values of correction coefficients and luminance. The correction coefficients have each been updated, as illustrated in FIGS. 10 and 11.

This concludes the description regarding (Process 1) to (Process 4).

The output from the imaging unit 7 and the optical sensor unit 8 changes depending upon the temperature of the imaging unit 7 and the optical sensor unit 8. However, the two-dimensional color measurement device 1 need not update correction coefficients when the change in output is ignorable.

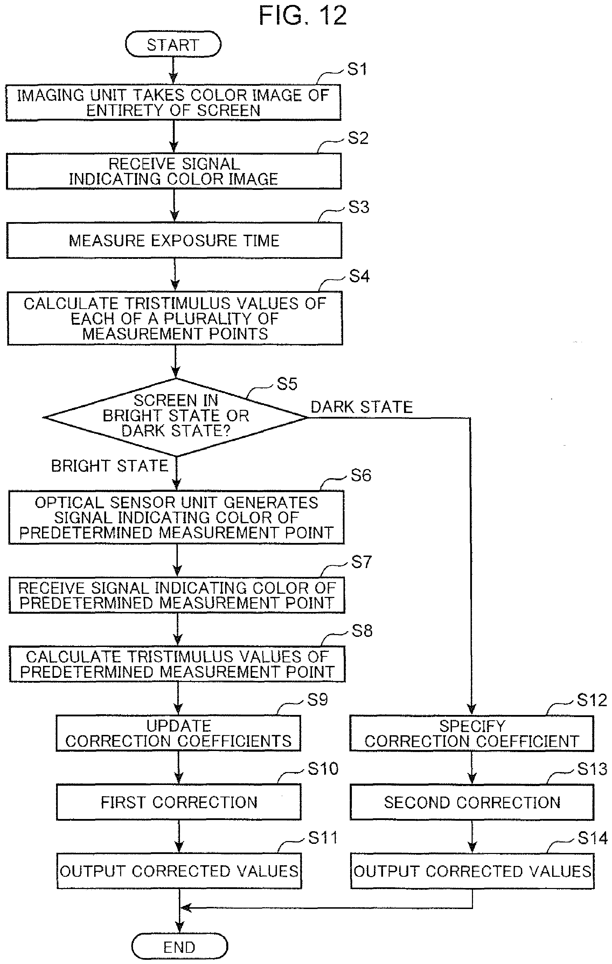

There are two examples of operations of the two-dimensional color measurement device 1 according to the present embodiment, namely a first example and a second example. In both the first example and the second example, in a state in which the chromaticity of the entirety of the screen SC is fixed at a certain chromaticity, the luminance of the entirety of the screen SC is decreased in stages from a high value to a low value, and the two-dimensional color measurement device 1 performs color measurement of the screen SC at each stage. The color measurement performed at each stage is one round of color measurement. First, description is provided of the first example. FIG. 12 is a flowchart for describing the first example of the operations of the two-dimensional color measurement device 1 according to the present embodiment.

With reference to FIG. 2, in the first example, exposure time is used as the index value. The storage unit 95 stores therein in advance the look-up table illustrated in FIG. 4. Because luminance is not used as an index value in the first example, the storage unit 95 does not store therein the look-up table illustrated in FIG. 5.

The update unit 98 has already executed Process 1 described above. Accordingly, the update unit 98 has the initial calculation formulas described above stored therein in advance. In the first example, exposure time is used as the index value and luminance is not used as an index value. Thus, the update unit 98 creates formulas 9 to 17 among the formulas 9 to 26 and has the formulas 9 to 17 stored therein in advance as the initial calculation formulas.

With reference to FIG. 1, the screen SC of the liquid crystal display that is to become the measurement target is sent to the imaging region RA by the conveyance means (not illustrated). Chromaticity and luminance are set to be the same over the entirety of the screen SC.

With reference to FIGS. 2 and 12, the control and processing unit 9 controls the imaging unit 7 and cuases the imaging unit 7 to take a color image of the entirety of the screen SC (step S1). The light-receiving part 2 transmits a signal SG1 indicating this color image to the main body part 3, and the main body part 3 receives this signal SG1 (step S2).

The exposure control unit 93 terminates the exposure (that is, terminates the imaging in step S1) when determining that the necessary exposure amount has been reached in the imaging in step S1, based on the signal SG1 having been received in step S2. In this control, the exposure control unit 93 measures the exposure time from the start to the end of the exposure (step S3).

The first calculation unit 91 uses the signal SG1 having been received in step S2 to calculate tristimulus values of each of the plurality of measurement points P1 included in the screen SC (step S4).

With reference to FIGS. 4 and 12, the determination unit 94 uses the exposure time having been measured in step S3 as the index value and determines whether the screen SC, a color image of which has been taken in step S1, is in the bright state or the dark state (step S5).

For example, when the exposure time having been measured in step S3 is T1, the determination unit 94 determines that the screen SC is in the bright state and proceeds to step S6. The control and processing unit 9 activates the optical sensor unit 8 and causes the optical sensor unit 8 to generate a signal SG2 indicating the color of the predetermined measurement point P2 on the screen SC (step S6).

With reference to FIGS. 2 and 12, the light-receiving part 2 transmits the signal SG2 having been generated in step S6 to the main body part 3 and the main body part 3 receives this signal SG2 (step S7).

The second calculation unit 92 uses the signal SG2 having been received in step S7 to calculate tristimulus values of the predetermined measurement point P2 (step S8).

Update of correction coefficients is performed (step S9). To provide detailed description, the third calculation unit 97 calculates the correction coefficient associated with exposure time T1. This corresponds to Process 2 described above. The update unit 98 recalculates formulas 9 to 17 by using the correction coefficient having been calculated by the third calculation unit 97. This corresponds to Process 3 described above. The update unit 98 calculates correction coefficients corresponding to the exposure time values T1, T2, T3, T4 by using the recalculated formulas 9 to 17 (that is, the recalculated calculation formulas described above), uses the calculated correction coefficients as updated values of the correction coefficients, creates a look-up table in which the updated values of the correction coefficients and exposure time are associated, and has the storage unit 95 store this look-up table therein. In such a manner, correction coefficients are updated as illustrated in FIG. 10. This corresponds to Process 4 described above.

The correction unit 96 executes the first correction (step S10). That is, the correction unit 96 uses the tristimulus values of the predetermined measurement point P2 having been calculated in step S8 and corrects the tristimulus values of each of the plurality of measurement points P1 having been calculated in step S4. Hence, corrected values of the tristimulus values of each of the plurality of measurement points P1 are yielded. The output unit 11 outputs these corrected values (step S11).

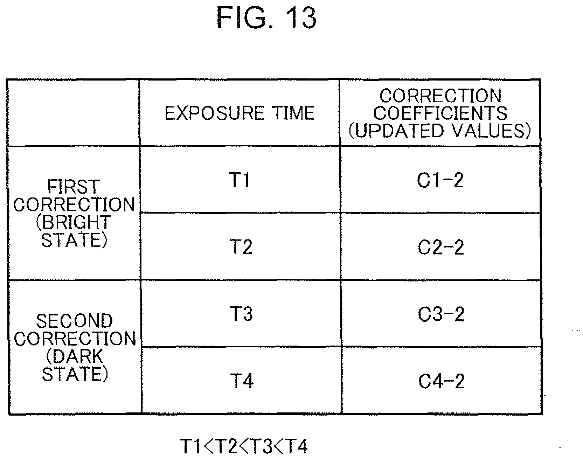

This completes the first round of color measurement. Then, the luminance of the entirety of the screen SC is set to a slightly lower value. In this state, the two-dimensional color measurement device 1 returns to step S1 to perform the second round of color measurement. For example, suppose that the screen SC is determined as being in the bright state in step S5 in the second round of color measurement. The two-dimensional color measurement device 1 updates correction coefficients through after steps S6, S7, and S8 (step S9). The correction coefficients at this time are illustrated in FIG. 13. FIG. 13 is an explanatory drawing for describing another example of a look-up table indicating the relationship between updated values of correction coefficients and exposure time. The correction coefficients have been updated, as can be seen through a comparison with FIG. 10.

Then, the two-dimensional color measurement device 1 executes the first correction (step S10). Hence, corrected values of the tristimulus values of each of the plurality of measurement points P1 are yielded. The output unit 11 outputs these corrected values (step S11). This completes the second round of color measurement. Then, the luminance of the entirety of the screen SC is set slightly lower. In this state, the two-dimensional color measurement device 1 returns to step S1 to perform the third round of color measurement. For example, suppose that the screen SC is determined as being in the dark state in step S5 in the third round of color measurement.

The correction unit 96 specifies a correction coefficient by using the exposure time having been measured in step S3 in the third round of color measurement and the latest look-up table (the look-up table illustrated in FIG. 13 in this case) (step S12). For example, when the exposure time having been measured in step S3 in the third round of color measurement is T3, correction coefficient C3-2 is specified.

The correction unit 96 executes the second correction (step S13). That is, the correction unit 96 uses the correction coefficient having been specified in step S12 and corrects the tristimulus values of each of the plurality of measurement points P1 having been calculated in step S4 in the third round of color measurement. Hence, corrected values of the tristimulus values of each of the plurality of measurement points P1 are yielded. The output unit 11 outputs these corrected values (step S14). This completes the third round of color measurement. Then, the luminance of the entirety of the screen SC is set slightly lower. In this state, the two-dimensional color measurement device 1 returns to step S1 to perform the next round (the fourth round) of color measurement.

In the next round of color measurement, the processing between steps S12 and S 14 is performed when the determination unit 94 determines that the screen is in the dark state and the processing between steps S6 and S11 is performed when the determination unit 94 determines that the screen is in the bright state. As described above, the luminance of the entirety of the screen SC is lowered in stages, and the two-dimensional color measurement device 1 performs color measurement of the screen SC at each stage. Accordingly, when the determination unit 94 determines that the screen SC is in the dark state (step S5) in a given round of color measurement, the determination unit 94 will determine that the screen SC is in the dark state in the next round of color measurement. However, there is a possibility that the determination unit 94 determines that the screen SC is in the bright state for some reason (for example, when the actual luminance of the screen SC is higher than the luminance having been set to the screen SC). In such a case, the two-dimensional color measurement device 1 performs the processing between steps S6 and S11.

As described up to this point, in the first example, the determination unit 94 uses the exposure time when the imaging unit 7 takes the color image of the screen SC (step S3) in a current round of color measurement as the index value in the current round of color measurement, and determines that the screen SC is in the bright state when the exposure time is equal to or shorter than a predetermined value and determines that the screen SC is in the dark state when the exposure time is longer than the predetermined value (step S5).

The correction unit 96 performs the second correction when the screen SC is determined as being in the dark state (step S13). The third round of color measurement corresponds to this case. Accordingly, it becomes unnecessary for the two-dimensional color measurement device 1 to control the optical sensor unit 8 in a current round (the third round) of color measurement, and thus, the tasks of the control unit of the two-dimensional color measurement device 1 can be reduced.

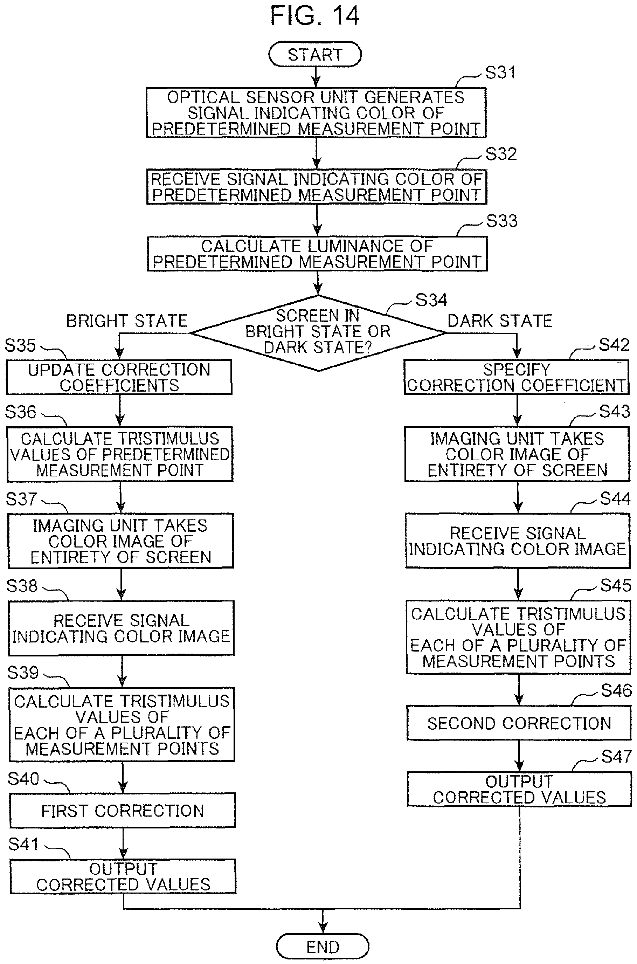

Description is provided of the second example of the two-dimensional color measurement device 1 according to the present embodiment. Exposure time is used as the index value in the first example. Meanwhile, exposure time and luminance are used as index values in the second example. FIG. 14 is a flowchart for describing the second example of the operations of the two-dimensional color measurement device 1 according to the present embodiment.

With reference to FIGS. 2 and 14, the storage unit 95 stores therein in advance the look-up tables illustrated in FIGS. 4 and 5. The update unit 98 has already executed Process 1 described above. Accordingly, the update unit 98 has the initial calculation formulas described above stored therein in advance. In the second example, exposure time and luminance are used as the index values. Thus, the update unit 98 creates formulas 9 to 26 and has these formulas stored therein in advance as the initial calculation formulas.

With reference to FIG. 1, the screen SC of the liquid crystal display that is to become the measurement target is sent to the imaging region RA by the conveyance means (not illustrated). Chromaticity and luminance are set to be the same over the entirety of the screen SC.

With reference to FIGS. 2 and 14, the control and processing unit 9 activates the optical sensor unit 8 and causes the optical sensor unit 8 to generate a signal SG2 indicating the color of the predetermined measurement point P2 on the screen SC (step S31).

The light-receiving part 2 transmits the signal SG2 having been generated in step S31 to the main body part 3 and the main body part 3 receives this signal SG2 (step S32).

The second calculation unit 92 uses the signal SG2 having been received in step S32 to calculate the luminance of the predetermined measurement point P2 (step S33).

With reference to FIGS. 2, 5, and 14, the determination unit 94 uses the luminance having been calculated in step S33 as the index value and determines whether the screen SC is in the bright state or the dark state (step S34). There is a deviation between the luminance value set to the screen SC and the actual luminance of the screen SC, and the precise luminance of the screen SC is measured by the spot color measurement unit 13 (color measurement using the optical sensor unit 8).

For example, when the luminance having been measured in step S33 is Y1, the determination unit 94 determines that the screen SC is in the bright state and proceeds to step S35.

Update of correction coefficients is performed (step S35). To provide detailed description, the third calculation unit 97 calculates the correction coefficient associated with luminance Y1. This corresponds to Process 2 described above. The update unit 98 recalculates formulas 18 to 26 by using the correction coefficient having been calculated by the third calculation unit 97. This corresponds to Process 3 described above. The update unit 98 calculates correction coefficients corresponding to the luminance values Y1, Y2, Y3, Y4 by using the recalculated formulas 18 to 26 (that is, the recalculated calculation formulas described above), uses the calculated correction coefficients as updated values of the correction coefficients, creates a look-up table in which the updated values of the correction coefficients and luminance are associated, and causes the storage unit 95 to store this look-up table therein. In such a manner, correction coefficients are updated as illustrated in FIG. 11. This corresponds to Process 4 described above.

With reference to FIGS. 2 and 14, the second calculation unit 92 uses the signal SG2 having been received in step S32 and indicating the color of the predetermined measurement point P2, to calculate tristimulus values of the predetermined measurement point P2 (step S36).

The control and processing unit 9 controls the imaging unit 7 and causes the imaging unit 7 to take a color image of the entirety of the screen SC (step S37). The light-receiving part 2 transmits a signal SG1 indicating this color image to the main body part 3, and the main body part 3 receives this signal SG1 (step S38).

The first calculation unit 91 uses the signal SG1 having been received in step S38 to calculate tristimulus values of each of the plurality of measurement points P1 included in the screen SC (step S39).

The correction unit 96 executes the first correction (step S40). That is, the correction unit 96 uses the tristimulus values of the predetermined measurement point P2 having been calculated in step S36 and corrects the tristimulus values of each of the plurality of measurement points P1 having been calculated in step S39. Hence, corrected values of the tristimulus values of each of the plurality of measurement points P1 are yielded. The output unit 11 outputs these corrected values (step S41).

This completes the first round of color measurement. Then, the luminance of the entirety of the screen SC is set slightly lower. In this state, the two-dimensional color measurement device 1 returns to step S31 to perform the second round of color measurement. For example, suppose that the screen SC is determined as being in the dark state in step S34 in the second round of color measurement.

The correction unit 96 specifies a correction coefficient by using the luminance having been calculated in step S33 in the second round of color measurement and the latest look-up table (the look-up table illustrated in FIG. 11 in this case) (step S42).

The control and processing unit 9 controls the imaging unit 7 and causes the imaging unit 7 to take a color image of the entirety of the screen SC (step S43). The light-receiving part 2 transmits a signal SG1 indicating this color image to the main body part 3, and the main body part 3 receives this signal SG1 (step S44).

The first calculation unit 91 uses the signal SG1 having been received in step S44 and indicating the color image of the screen SC, to calculate tristimulus values of each of the plurality of measurement points P1 included in the screen SC (step S45).

The correction unit 96 executes the second correction (step S46). That is, the correction unit 96 uses the correction coefficient having been specified in step S42 and corrects the tristimulus values of each of the plurality of measurement points P1 having been calculated in step S45 in the second round of color measurement. Hence, corrected values of the tristimulus values of each of the plurality of measurement points P1 are yielded. The output unit 11 outputs these corrected values (step S47). This completes the second round of color measurement. Then, the luminance of the entirety of the screen SC is set slightly lower. In this state, the two-dimensional color measurement device 1 performs the third round of color measurement.

The accuracy of the measurement of luminance using the optical sensor unit 8 decreases when the luminance of the screen SC decreases. In view of this, in the second example, the determination of whether the screen SC is in the bright state or the dark state is performed by using exposure time as the index value. That is, the two-dimensional color measurement device 1 performs the processing between steps S1 and S14 illustrated in FIG. 12 to perform the third round of color measurement.

Suppose that the screen SC is determined as being in the dark state in step S5 in the third round of color measurement. The two-dimensional color measurement device 1 performs the processing between steps S12 and S14. This completes the third round of color measurement. Then, the luminance of the entirety of the screen SC is set slightly lower. In this state, the two-dimensional color measurement device 1 returns to step S1 in FIG. 12 to perform the fourth round of color measurement.

Meanwhile, suppose that the screen SC is determined as being in the bright state for some reason (for example, when the actual luminance of the screen SC is higher than the luminance having been set to the screen SC) in step S5 in the third round of color measurement. The two-dimensional color measurement device 1 performs the processing between steps S6 and S11. This completes the third round of color measurement. Then, the screen SC is put in a state in which the luminance of the entirety of the screen SC is slightly lowered. In this state, the two-dimensional color measurement device 1 returns to step S31 in FIG. 14 to perform the fourth round of color measurement. This is because the screen SC has been determined as being in the bright state in step S5 in the third round of color measurement, and thus, there is a possibility of the screen SC being determined as being in the bright state in the fourth round of color measurement.

As described up to this point, in the second example, the determination unit 94 uses the luminance calculated by the second calculation unit 92 (step S33) in a current round of color measurement as the index value in the current round of color measurement, and determines that the screen SC is in the bright state when the luminance is equal to or higher than a predetermined value and determines that the screen SC is in the dark state when the luminance is lower than the predetermined value (step S34). The determination unit 94, when determining that the screen SC is in the dark state in a current round of color measurement, uses the exposure time when the imaging unit 7 takes the color image of the screen SC (step S3 in FIG. 12 described in the second example) in the next round of color measurement as the index value in the next round of color measurement, and determines that the screen SC is in the bright state when the exposure time is equal to or shorter than a predetermined value and determines that the screen SC is in the dark state when the exposure time is longer than the predetermined value (step S5 in FIG. 12 described in the second example).

The accuracy of the measurement of luminance is high when the luminance of the screen SC is relatively high but decreases when the luminance of the screen SC is relatively low. In view of this, the two-dimensional color measurement device 1 initially performs color measurement by using luminance as the index value (FIG. 14), and when determining that the screen SC is in the dark state in a given round (a current round) of color measurement, changes the index value from luminance to exposure time in the next round of color measurement (FIG. 12 described in the second example). It becomes unnecessary for the two-dimensional color measurement device 1 to control the optical sensor unit 8 when the second correction is to be performed in the next round of color measurement, and thus, the tasks of the control unit of the two-dimensional color measurement device 1 can be reduced.

Note that when the determination unit 94 determines that the screen SC is in the bright state in a current round of color measurement, the determination unit 94 determines whether the screen SC is in the bright state or the dark state in the next round of color measurement by using the luminance calculated by the second calculation unit 92 in the next round of color measurement as the index value.

Description is provided of a first modification of the present embodiment. When correction coefficients are applied uniformly regardless of the characteristic of the screen SC, corrected values with high accuracy cannot be yielded in the second correction. In view of this, the first modification enables correction coefficients to be selected in accordance with the characteristic of the screen SC.

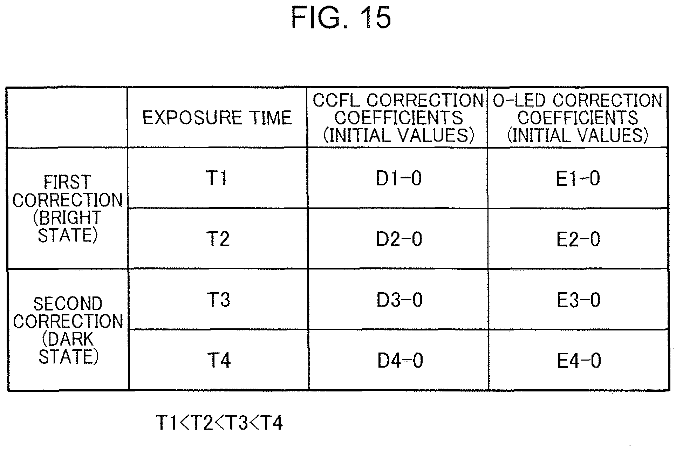

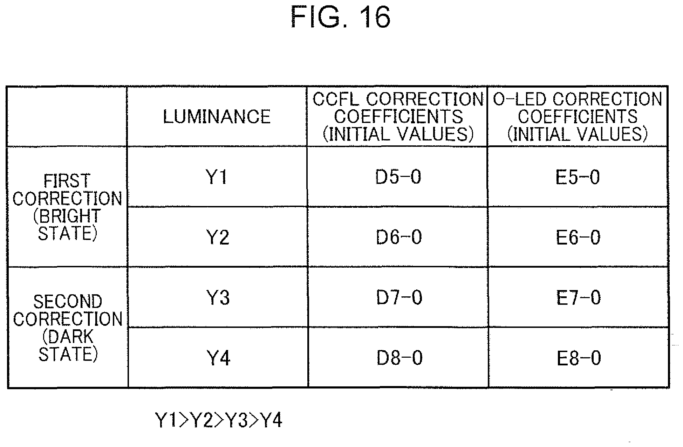

The type of light source of the screen SC and the distance between the screen SC and the light-receiving part 2 are examples of characteristics of the screen SC. A cold cathode fluorescent lamp (CCFL) and an organic light emitting diode (O-ELD) are examples of types of light sources of the screen SC. FIG. 15 is an explanatory drawing for describing one example of a look-up table indicating the relationships between initial values of correction coefficients and exposure time, set in accordance with light sources of the screen SC. FIG. 16 is an explanatory drawing for describing one example of a look-up table indicating the relationships between initial values of correction coefficients and luminance, set in accordance with light sources of the screen SC. The storage unit 95 illustrated in FIG. 2 stores therein in advance look-up tables as illustrated in FIGS. 15 and 16.

For example, the correction coefficient would be as expressed by formula 27 when the light source of the screen SC is a CCFL and the luminance is Y1, and would be as expressed by formula 28, for example, when the light source of the screen SC is an O-LED and the luminance is Y1.

[Math 9]

$$\begin{pmatrix} X_r & X_g & X_b \\ Y_r & Y_g & Y_b \\ Z_r & Z_g & Z_b \end{pmatrix} \cdot \begin{pmatrix} CX_r & CX_g & CX_b \\ CY_r & CY_g & CY_b \\ CZ_r & CZ_g & CZ_b \end{pmatrix}^{-1} = \begin{pmatrix} 0.744 & 0.756 & 2.767 \\ -0.420 & 2.935 & 0.327 \\ 6.553 & -1.563 & 0.459 \end{pmatrix} \cdots \text{Formula 27}$$

[Math 10]

$$\begin{pmatrix} X_r & X_g & X_b \\ Y_r & Y_g & Y_b \\ Z_r & Z_g & Z_b \end{pmatrix} \cdot \begin{pmatrix} CX_r & CX_g & CX_b \\ CY_r & CY_g & CY_b \\ CZ_r & CZ_g & CZ_b \end{pmatrix}^{-1} = \begin{pmatrix} 0.663 & 0.492 & 2.458 \\ -0.385 & 2.818 & 0.290 \\ 5.989 & -1.387 & 0.298 \end{pmatrix} \cdots \text{Formula 28}$$

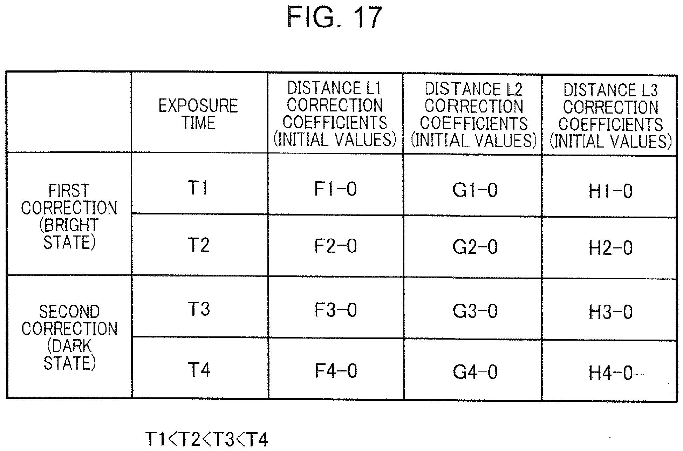

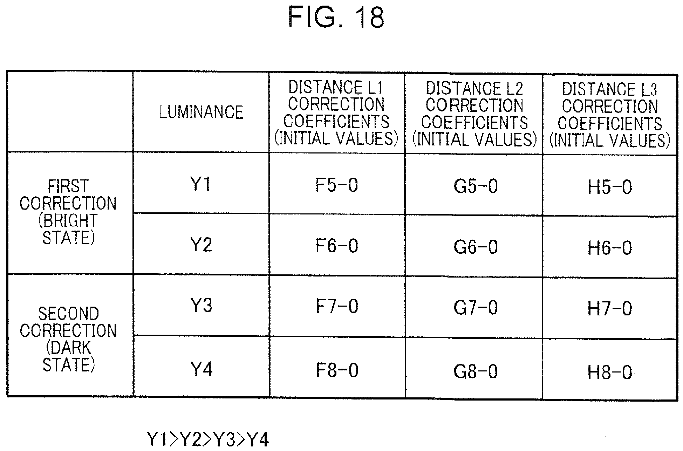

The distance between the screen SC and the light-receiving part 2 can be referred to as the panel size of the screen SC in other words. FIG. 17 is an explanatory drawing for describing one example of a look-up table indicating the relationships between initial values of correction coefficients and exposure time, set in accordance with distance. FIG. 18 is an explanatory drawing for describing one example of a look-up table indicating the relationships between initial values of correction coefficients and luminance, set in accordance with distance. The storage unit 95 illustrated in FIG. 2 stores therein in advance look-up tables as illustrated in FIGS. 17 and 18.

The first modification includes a first operation unit on which an operation for inputting a characteristic of the screen SC (for example, the type of the light source of the screen SC, the distance between the screen SC and the light-receiving part 2) is to be performed. The input unit 10 illustrated in FIG. 2 functions as the first operation unit. The update unit 98 illustrated in FIG. 2 stores therein in advance a plurality of calculation formulas for calculating updated values of correction coefficients in accordance with the characteristic described above, and when updating correction coefficients (step S9 in FIG. 12, step S35 in FIG. 14), updates correction coefficients by using the calculation formulas associated with the characteristic input to the first operation unit. For example, when the operator operates the first operation unit and inputs CCFL as the type of the light source of the screen SC, the update unit 98 updates the correction coefficients in FIG. 15 from D1-0, D2-0, D3-0, and D4-0 to D1-1, D2-1, D3-1, and D4-1, respectively.

Description is provided of a second modification of the present embodiment. In the present embodiment, the second correction is always performed (step S13 in FIG. 12, step S46 in FIG. 14) when the screen SC is determined as being in the dark state (step S5 in FIG. 12, step S34 in FIG. 14). The second modification enables the operator of the two-dimensional color measurement device 1 to select the first correction or the second correction in advance.

The second modification includes a second operation unit on which an operation for selecting either the first correction or the second correction in advance as the correction to be executed by the correction unit 96 illustrated in FIG. 2 when the screen SC is determined as being in the dark state is performed. The input unit 10 illustrated in FIG. 2 functions as the second operation unit. The correction unit 96 executes the first correction when the screen SC is determined as being in the dark state in a state in which the first correction is selected, and executes the second correction when the screen SC is determined as being in the dark state in a state in which the second correction is selected.

In the first correction, tristimulus values of the predetermined measurement point P2 are used to correct the tristimulus values of each of the plurality of measurement points P1. In the second correction, a predetermined correction coefficient is used to correct the tristimulus values of each of the plurality of measurement points P1. Due to this, the first correction has higher correction accuracy than the second correction. The operator selects the first correction when desiring correction with high accuracy and selects the second correction when desiring that measurement time at low luminance would not become long.

(Summary of Embodiment)

A two-dimensional color measurement device according to a first aspect of the present embodiment includes: an imaging unit that includes a two-dimensional imaging element and takes a color image of a light-emitting region that is two-dimensional and is a measurement target; an optical sensor unit that receives light from a predetermined measurement point included in the light-emitting region and outputs a signal indicating a color of the predetermined measurement point; a first calculation unit that uses a signal indicating the color image of the light-emitting region to calculate tristimulus values of each of a plurality of measurement points included in the light-emitting region, the signal indicating the color image of the light-emitting region being output from the imaging unit; a second calculation unit that uses the signal indicating the color of the predetermined measurement point to calculate tristimulus values of the predetermined measurement point, the signal indicating the color of the predetermined measurement point being output from the optical sensor unit; a determination unit that makes a distinction between a bright state of the light-emitting region and a dark state of the light-emitting region by using, as a yardstick, a case in which an index value indicating a brightness of the light-emitting region equals a predetermined value, and uses the index value to determine whether the light-emitting region is in the bright state or the dark state; a storage unit that stores in advance a predetermined correction coefficient; and a correction unit that executes a first correction when the determination unit determines that the light-emitting region is in the bright state and executes a second correction when the determination unit determines that the light-emitting region is in the dark state, the first correction being a correction in which the tristimulus values of each of the plurality of measurement points, which have been calculated by the first calculation unit, are corrected by using the tristimulus values of the predetermined measurement point, which have been calculated by the second calculation unit, the second correction being a correction in which the tristimulus values of each of the plurality of measurement points, which have been calculated by the first calculation unit, are corrected by using the correction coefficient stored in the storage unit.

The exposure time when the imaging unit takes the color image of the entirety of the two-dimensional light-emitting region and the luminance of the predetermined measurement point, which is calculated by using the signal that is output from the optical sensor unit and indicates the color of the predetermined measurement point, are examples of indices of the brightness of the two-dimensional light-emitting region. Description is provided of exposure time. The exposure time is short when the two-dimensional light-emitting region is bright and is long when the two-dimensional light-emitting region is dark. Accordingly, the determination unit determines that the two-dimensional light-emitting region is in the bright state when the exposure time is equal to or shorter than the predetermined value and determines that the two-dimensional light-emitting region is in the dark state when the exposure time is longer than the predetermined value. Description is provided of luminance. The luminance of the predetermined measurement point is high when the two-dimensional light-emitting region is bright and is low when the two-dimensional light-emitting region is dark. Accordingly, the determination unit determines that the two-dimensional light-emitting region is in the bright state when the luminance of the predetermined measurement point is equal to or higher than the predetermined value, and determines that the two-dimensional light-emitting region is in the dark state when the luminance of the predetermined measurement point is lower than the predetermined value.

The correction unit executes the first correction when the light-emitting region is in the bright state. When the light-emitting region becomes dark (in other words, when the luminance of the light-emitting region decreases), the amount of light that the optical sensor unit receives decreases and thus the color measurement time increases. Further, while the color measurement using the optical sensor unit has higher color measurement accuracy than the color measurement using the imaging unit, the color measurement accuracy of the color measurement using the optical sensor unit decreases when the light-emitting region becomes dark. In view of this, the correction unit executes the second correction when the light-emitting region is in the dark state. In the second correction, the color measurement using the optical sensor unit is not performed and the tristimulus values of each of the plurality of measurement points, which have been calculated by the first calculation unit, are corrected by using the correction coefficient. Accordingly, it can be ensured that color measurement time does not increase even in a state in which the luminance of the light-emitting region is low.

As described up to this point, according to the two-dimensional color measurement device according to the first aspect of the present embodiment, it can be ensured that color measurement time at low luminance does not increase, in a case in which color measurement is performed with respect to the two-dimensional light-emitting region while changing the luminance.

In the above-described structure, the storage unit stores in advance a plurality of the index values and a plurality of the correction coefficients associated with respective ones of the plurality of index values, the plurality of index values having different values from one another, and when the determination unit determines that the light-emitting region is in the dark state, the correction unit executes the second correction by using the correction coefficient associated with the index value having been used to perform the determination.

When the correction coefficient varies depending upon the level of the index value, the accuracy of the second correction would decrease if there were only one correction coefficient. According to this structure, the second correction is performed by using a correction coefficient that is allocated to correspond to the level of the index value. Due to this, the accuracy of the second correction does not decrease even in a case in which the correction coefficient varies depending upon the level of the index value.

In the above-described structure, a third calculation unit that, when the determination unit determines that the light-emitting region is in the bright state, calculates the correction coefficient associated with the index value having been used to perform the determination; and an update unit that stores in advance a calculation formula for calculating an updated value of the correction coefficient, uses the correction coefficient calculated by the third calculation unit to recalculate the calculation formula, uses the recalculated calculation formula to calculate updated values of the plurality of correction coefficients, and sets the updated values as the plurality of correction coefficients stored in advance in the storage unit are further included.

The output from the imaging unit and the optical sensor unit changes in accordance with the temperature of the imaging unit and the optical sensor. Due to this, the accuracy of the second correction would decrease if correction coefficients are fixed. Thus, there is a need of updating correction coefficients. In this structure, the update unit updates the correction coefficients when the light-emitting region is determined as being in the bright state by the determination unit.

In the above-described structure, a first operation unit on which an operation for inputting a characteristic of the light-emitting region in advance is performed, is further included, and the update unit stores in advance a plurality of the calculation formulas in accordance with the characteristic and updates the correction coefficient by using the calculation formula associated with the characteristic input to the first operation unit.

The type of the light source of the light-emitting region and the distance between the light-emitting region and the light-receiving part (the imaging unit and the optical sensor unit) of the two-dimensional color measurement device are examples of characteristics of the light-emitting region. When correction coefficients are applied uniformly regardless of the characteristic of the light-emitting region, corrected values with high accuracy cannot be yielded in the second correction. In view of this, this structure enables correction coefficients to be selected in accordance with the characteristic of the light-emitting region.

In the above-described structure, a second operation unit on which an operation of selecting one of the first correction and the second correction in advance as a correction to be executed by the correction unit when the determination unit determines that the light-emitting region is in the dark state is performed is further included, and the correction unit executes the first correction when the determination unit determines that the light-emitting region is in the dark state in a state in which the second operation unit has been operated and the first correction is selected, and executes the second correction when the determination unit determines that the light-emitting region is in the dark state in a state in which the second operation unit has been operated and the second correction is selected.

As described above, in the first correction, tristimulus values of the predetermined measurement point are used to correct the tristimulus values of each of the plurality of measurement points. In the second correction, the predetermined correction coefficient is used to correct the tristimulus values of each of the plurality of measurement points. Due to this, the first correction has higher correction accuracy than the second correction. The operator of the two-dimensional color measurement device selects the first correction when desiring correction with high accuracy and selects the second correction when desiring that measurement time at low luminance would not become long.

In the above-described structure, the determination unit sets, as the index value in a current round of color measurement, the exposure time when the imaging unit takes the color image of the light-emitting region in the current round of color measurement, and determines that the light-emitting region is in the bright state when the exposure time is equal to or shorter than the predetermined value and determines that the light-emitting region is in the dark state when the exposure time is longer than the predetermined value.

This structure is based on a configuration in which the luminance of the entirety of the light-emitting region is changed in stages and the two-dimensional color measurement device performs color measurement of the light-emitting region at each stage. The color measurement performed at each stage is one round of color measurement. In this structure, the exposure time when the imaging unit takes the color image of the light-emitting region in a current round of color measurement is set as the index value in the current round of color measurement. The correction unit performs the second correction when the determination unit determines that the light-emitting region is in the dark state based on this index value. Accordingly, it becomes unnecessary for the two-dimensional color measurement device to control the optical sensor unit in the current round of color measurement, and thus, the tasks of the control unit of the two-dimensional color measurement device can be reduced.

In the above-described structure, the second calculation unit uses the signal indicating the color of the predetermined measurement point to calculate a luminance of the predetermined measurement point, the signal indicating the color of the predetermined measurement point being output from the optical sensor unit, the determination unit sets, as the index value in a current round of color measurement, the luminance calculated by the second calculation unit in the current round of color measurement, and determines that the light-emitting region is in the bright state when the luminance is equal to or higher than the predetermined value and determines that the light-emitting region is in the dark state when the luminance is lower than the predetermined value, and the determination unit, when determining that the light-emitting region is in the dark state in the current round of color measurement, sets, as the index value in a next round of color measurement, the exposure time when the imaging unit takes the color image of the light-emitting region in the next round of color measurement, and determines that the light-emitting region is in the bright state when the exposure time is equal to or shorter than the predetermined value and determines that the light-emitting region is in the dark state when the exposure time is longer than the predetermined value.

This structure is based on a configuration in which, in a state in which the chromaticity of the entirety of the light-emitting region is fixed at a certain chromaticity, the luminance of the entirety of the light-emitting region is decreased in stages from a high value to a low value, and the two-dimensional color measurement device performs color measurement of the light-emitting region at each stage. The color measurement performed at each stage is one round of color measurement. The accuracy of the measurement of luminance is high when the luminance of the light-emitting region is relatively high but decreases when the luminance of the light-emitting region is relatively low. In view of this, the two-dimensional color measurement device initially performs color measurement by using luminance as the index value, and when determining that the light-emitting region is in the dark state in a given round (a current round) of color measurement, changes the index value from luminance to exposure time in the next round of color measurement. It becomes unnecessary for the two-dimensional color measurement device to control the optical sensor unit when the second correction is to be performed in the next round of color measurement, and thus, the tasks of the control unit of the two-dimensional color measurement device can be reduced.

In the above-described structure, an optical splitting unit that splits light from the light-emitting region in two is further included, the imaging unit is disposed along an optical path of one part of the light split in two, and the optical sensor unit is disposed along an optical path of the other part of the light split in two.

In this structure, one part of the light split in two at the optical splitting unit is received by the imaging unit, and the other part of the light split in two is received by the optical sensor unit. Thus, the amount of light received by each of the imaging unit and the optical sensor unit becomes even smaller. Due to this, color measurement time becomes even longer when the luminance of the light-emitting region is low. Even with such a configuration, however, the two-dimensional color measurement device according to the first aspect of the present invention can ensure that color measurement time does not increase because the second correction is performed when the light-emitting region is in the dark state.

A two-dimensional color measurement method according to a second aspect of the present embodiment is a two-dimensional color measurement method in which a two-dimensional color measurement device including: an imaging unit that includes a two-dimensional imaging element and takes a color image of a light-emitting region that is two-dimensional and is a measurement target; and an optical sensor unit that receives light from a predetermined measurement point included in the light-emitting region and outputs a signal indicating a color of the predetermined measurement point is used, the two-dimensional color measurement method including: a first step of using a signal indicating the color image of the light-emitting region to calculate tristimulus values of each of a plurality of measurement points included in the light-emitting region, the signal indicating the color image of the light-emitting region being output from the imaging unit; a second step of using the signal indicating the color of the predetermined measurement point to calculate tristimulus values of the predetermined measurement point, the signal indicating the color of the predetermined measurement point being output from the optical sensor unit; a third step of making a distinction between a bright state of the light-emitting region and a dark state of the light-emitting region by using, as a yardstick, a case in which an index value indicating a brightness of the light-emitting region equals a predetermined value, and using the index value to determine whether the light-emitting region is in the bright state or the dark state; and a fourth step of executing a first correction when the third step determines that the light-emitting region is in the bright state and executing a second correction when the third step determines that the light-emitting region is in the dark state, the first correction being a correction in which the tristimulus values of each of the plurality of measurement points, which have been calculated by the first step, are corrected by using the tristimulus values of the predetermined measurement point, which have been calculated by the second step, the second correction being a correction in which the tristimulus values of each of the plurality of measurement points, which have been calculated by the first step, are corrected by using a predetermined correction coefficient.

The second aspect of the present embodiment has operations and effects similar to those of the first aspect of the present embodiment.

## Industrial Applicability

According to the present invention, a two-dimensional color measurement device, and a two-dimensional color measurement method can be provided.

## Claims

1. A two-dimensional color measurement device (1) comprising:

   an imaging unit (7) that includes a two-dimensional imaging element (72) and configured to take a color image of a light-emitting region (SC) that is two-dimensional and is a measurement target;
   an optical sensor unit (8) configured to receive light from a predetermined measurement point (P2) included in the light-emitting region (SC) and output a signal indicating a color of the predetermined measurement point (P2);

a first calculation unit (91) configured to use a signal indicating the color image of the light-emitting region (SC) to calculate tristimulus values of each of a plurality of measurement points (P1) included in the light-emitting region (SC), the signal indicating the color image of the light-emitting region (SC) being output from the imaging unit (7);

a second calculation unit (92) configured to use the signal indicating the color of the predetermined measurement point (P2) to calculate tristimulus values of the predetermined measurement point (P2), the signal indicating the color of the predetermined measurement point (P2) being output from the optical sensor unit (8);

a determination unit (94) configured to make a distinction between a bright state of the light-emitting region (SC) and a dark state of the light-emitting region (SC) by using, as a yardstick, a case in which an index value indicating a brightness of the light-emitting region (SC) equals a predetermined value, and uses the index value to determine whether the light-emitting region (SC) is in the bright state or the dark state;

a storage unit (95) configured to store in advance a predetermined correction coefficient; and

a correction unit (96) configured to execute a first correction when the determination unit (94) determines that the light-emitting region (SC) is in the bright state and execute a second correction when the determination unit (94) determines that the light-emitting region (SC) is in the dark state, the first correction being a correction in which the tristimulus values of each of the plurality of measurement points (P1), which have been calculated by the first calculation unit (91), are corrected by using the tristimulus values of the predetermined measurement point (P2), which have been calculated by the second calculation unit (92), the second correction being a correction in which the tristimulus values of each of the plurality of measurement points (P1), which have been calculated by the first calculation unit (91), are corrected by using the correction coefficient stored in the storage unit (95).

2. The two-dimensional color measurement device (1) according to claim 1, wherein

the storage unit (95) is configured to store in advance a plurality of the index values and a plurality of the correction coefficients associated with respective ones of the plurality of index values, the plurality of index values having different values from one another, and

the correction unit (96) is configured to execute, when the determination unit (94) determines that the light-emitting region (SC) is in the dark state, the second correction by using the correction coefficient associated with the index value having been used to perform the determination.

3. The two-dimensional color measurement device (1) according to claim 2, further comprising:

a third calculation unit (97) configured to calculate, when the determination unit (94) determines that the light-emitting region (SC) is in the bright state, the correction coefficient associated with the index value having been used to perform the determination; and

an update unit (98) configured to store in advance a calculation formula for calculating an updated value of the correction coefficient, uses the correction coefficient calculated by the third calculation unit (97) to recalculate the calculation formula, uses the recalculated calculation formula to calculate updated values of the plurality of correction coefficients, and sets, as the updated values, the plurality of correction coefficients stored in advance in the storage unit (95).

4. The two-dimensional color measurement device (1) according to claim 3, further comprising:

a first operation unit (10) configured such that an operation for inputting a characteristic of the light-emitting region (SC) in advance can be performed on it,
wherein
the update unit (98) is configured to store in advance a plurality of the calculation formulas in accordance with the characteristic and updates the correction coefficient by using the calculation formula associated with the characteristic input to the first operation unit (10).

5. The two-dimensional color measurement device (1) according to any one of claims 1 to 4, further comprising:

a second operation unit (10) configured such that an operation of selecting one of the first correction and the second correction in advance as a correction to be executed by the correction unit (96) when the determination unit (94) determines that the light-emitting region (SC) is in the dark state can be performed on it,
wherein
the correction unit (96) is configured to execute the first correction when the determination unit (94) determines that the light-emitting region (SC) is in the dark state in a state in which the second operation unit (10) has been operated and the first correction is selected, and execute the second correction when the determination unit (94) determines that the light-emitting region (SC) is in the dark state in a state in which the second operation unit (10) has been operated and the second correction is selected.

6. The two-dimensional color measurement device (1) according to any one of claims 1 to 5, wherein the determination unit (94) is configured to set, as the index value in a current round of color measurement, the exposure time when the imaging unit (7) takes the color image of the light-emitting region (SC) in the current round of color measurement, and determine that the light-emitting region (SC) is in the bright state when the exposure time is equal to or shorter than the predetermined value and determines that the light-emitting region (SC) is in the dark state when the exposure time is longer than the predetermined value.

7. The two-dimensional color measurement device (1) according to any one of claims 1 to 5, wherein

the second calculation unit (92) is configured to use the signal indicating the color of the predetermined measurement point (P2) to calculate a luminance of the predetermined measurement point (P2), the signal indicating the color of the predetermined measurement point (P2) being output from the optical sensor unit (8), the determination unit (94) is configured to set, as the index value in a current round of color measurement, the luminance calculated by the second calculation unit (92) in the current round of color measurement, and determine that the light-emitting region (SC) is in the bright state when the luminance is equal to or higher than the predetermined value and determines that the light-emitting region (SC) is in the dark state when the luminance is lower than the predetermined value, and the determination unit (94) is configured to set, when determining that the light-emitting region (SC) is in the dark state in the current round of color measurement, as the index value in a next round of color measurement, the exposure time when the imaging unit (7) takes the color image of the light-emitting region (SC) in the next round of color measurement, and determine that the light-emitting region (SC) is in the bright state when the exposure time is equal to or shorter than the predetermined value and determines that the light-emitting region (SC) is in the dark state when the exposure time is longer than the predetermined value.

8. The two-dimensional color measurement (1) device according to any one of claims 1 to 7, further comprising:

an optical splitting unit (6) configured to split light from the light-emitting region (SC) in two, wherein
the imaging unit (7) is disposed along an optical path of one part of the light split in two, and
the optical sensor unit (8) is disposed along an optical path of the other part of the light split in two.

9. A two-dimensional color measurement method in which a two-dimensional color measurement device (1) comprising: an imaging unit (7) that includes a two-dimensional imaging element (72) and takes a color image of a light-emitting region (SC) that is two-dimensional and is a measurement target; and an optical sensor unit (8) that receives light from a predetermined measurement point (P2) included in the light-emitting region (SC) and outputs a signal indicating a color of the predetermined measurement point (P2) is used, the two-dimensional color measurement method comprising:

a first step of using a signal indicating the color image of the light-emitting region (SC) to calculate tristimulus values of each of a plurality of measurement points (P 1) included in the light-emitting region (SC), the signal indicating the color image of the light-emitting region (SC) being output from the imaging unit (7);
a second step of using the signal indicating the color of the predetermined measurement point (P2) to calculate tristimulus values of the predetermined measurement point (P2), the signal indicating the color of the predetermined measurement point (P2) being output from the optical sensor unit (8);
a third step of making a distinction between a bright state of the light-emitting region (SC) and a dark state of the light-emitting region (SC) by using, as a yardstick, a case in which an index value indicating a brightness of the light-emitting region (SC) equals a predetermined value, and using the index value to determine whether the light-emitting region (SC) is in the bright state or the dark state; and
a fourth step of executing a first correction when the third step determines that the light-emitting region (SC) is in the bright state and executing a second correction when the third step determines that the light-emitting region (SC) is in the dark state, the first correction being a correction in which the tristimulus values of each of the plurality of measurement points (P1), which have been calculated by the first step, are corrected by using the tristimulus values of the predetermined measurement point (P2), which have been calculated by the second step, the second correction being a correction in which the tristimulus values of each of the plurality of measurement points (P 1), which have been calculated by the first step, are corrected by using a predetermined correction coefficient.

**Patentansprüche**

1. Zweidimensionale kolorimetrische Vorrichtung (1), umfassend:

eine Abbildungseinheit (7), die ein zweidimensionales Abbildungselement (72) einschließt und konfiguriert ist, um ein Farbbild eines lichtemittierenden Bereichs (SC) aufzunehmen, der zweidimensional ist und ein Messziel darstellt;

eine optische Sensoreinheit (8), die konfiguriert ist, um Licht von einem vorbestimmten Messpunkt (P2) zu empfangen, der in dem lichtemittierenden Bereich (SC) eingeschlossen ist, und ein Signal auszugeben, das eine Farbe des vorbestimmten Messpunkts (P2) anzeigt;

eine erste Berechnungseinheit (91), die konfiguriert ist, um ein Signal zu verwenden, das das Farbbild des lichtemittierenden Bereichs (SC) anzeigt, um Tristimuluswerte jedes einer Vielzahl von Messpunkten (P1) zu berechnen, die in dem lichtemittierenden Bereich (SC) eingeschlossen sind, wobei das Signal, das das Farbbild des lichtemittierenden Bereichs (SC) anzeigt, von der Abbildungseinheit (7) ausgegeben wird;

eine zweite Berechnungseinheit (92), die konfiguriert ist, um das Signal, das die Farbe des vorbestimmten Messpunkts (P2) anzeigt, zu verwenden, um Tristimuluswerte des vorbestimmten Messpunkts (P2) zu berechnen, wobei das Signal, das die Farbe des vorbestimmten Messpunkts (P2) anzeigt, von der optischen Sensoreinheit (8) ausgegeben wird;

eine Bestimmungseinheit (94), die konfiguriert ist, um eine Unterscheidung zwischen einem hellen Zustand des lichtemittierenden Bereichs (SC) und einem dunklen Zustand des lichtemittierenden Bereichs (SC) zu treffen, indem sie als Maßstab einen Fall verwendet, in dem ein Indexwert, der eine Helligkeit des lichtemittierenden Bereichs (SC) anzeigt, gleich einem vorbestimmten Wert ist, und den Indexwert verwendet, um zu bestimmen, ob der lichtemittierende Bereich (SC) in dem hellen Zustand oder dem dunklen Zustand ist;

eine Speichereinheit (95), die konfiguriert ist, um im Voraus einen vorbestimmten Korrekturkoeffizienten zu speichern; und

eine Korrektureinheit (96), die konfiguriert ist, um eine erste Korrektur auszuführen, wenn die Bestimmungseinheit (94) bestimmt, dass sich der lichtemittierende Bereich (SC) in dem hellen Zustand befindet, und eine zweite Korrektur auszuführen, wenn die Bestimmungseinheit (94) bestimmt, dass sich der lichtemittierende Bereich (SC) in dem dunklen Zustand befindet, wobei die erste Korrektur eine Korrektur ist, bei der die Tristimuluswerte jedes der Vielzahl von Messpunkten (P1), die von der ersten Berechnungseinheit (91) berechnet wurden, unter Verwendung der Tristimuluswerte des vorbestimmten Messpunkts (P2), die von der zweiten Berechnungseinheit (92) berechnet wurden, korrigiert werden, wobei die zweite Korrektur eine Korrektur ist, bei der die Tristimuluswerte jedes der Vielzahl von Messpunkten (P1), die von der ersten Berechnungseinheit (91) berechnet wurden, unter Verwendung des in der Speichereinheit (95) gespeicherten Korrekturkoeffizienten korrigiert werden.

2. Zweidimensionale kolorimetrische Vorrichtung (1) nach Anspruch 1, wobei

die Speichereinheit (95) konfiguriert ist, um im Voraus eine Vielzahl der Indexwerte und eine Vielzahl der Korrekturkoeffizienten zu speichern, die jeweiligen Werten der Vielzahl von Indexwerten zugeordnet sind, wobei die Vielzahl von Indexwerten voneinander verschiedene Werte aufweisen, und

die Korrektureinheit (96) konfiguriert ist, um, wenn die Bestimmungseinheit (94) bestimmt, dass sich der lichtemittierende Bereich (SC) in dem dunklen Zustand befindet, die zweite Korrektur unter Verwendung des Korrekturkoeffizienten auszuführen, der dem Indexwert zugeordnet ist, der verwendet wurde, um die Bestimmung durchzuführen.

3. Zweidimensionale kolorimetrische Vorrichtung (1) nach Anspruch 2, weiter umfassend:

eine dritte Berechnungseinheit (97), die konfiguriert ist, um, wenn die Bestimmungseinheit (94) bestimmt, dass sich der lichtemittierende Bereich (SC) in dem hellen Zustand befindet, den Korrekturkoeffizienten zu berechnen, der dem Indexwert zugeordnet ist, der verwendet wurde, um die Bestimmung durchzuführen; und

eine Aktualisierungseinheit (98), die konfiguriert ist, um im Voraus eine Berechnungsformel zum Berechnen eines aktualisierten Wertes des Korrekturkoeffizienten zu speichern, den von der dritten Berechnungseinheit (97) berechneten Korrekturkoeffizienten verwendet, um die Berechnungsformel neu zu berechnen, die neu berechnete Berechnungsformel verwendet, um aktualisierte Werte der Vielzahl von Korrekturkoeffizienten zu berechnen, und als die aktualisierten Werte die Vielzahl von Korrekturkoeffizienten einstellt, die im Voraus in der Speichereinheit (95) gespeichert wurden.

4. Zweidimensionale kolorimetrische Vorrichtung (1) nach Anspruch 3, weiter umfassend:

eine erste Betriebseinheit (10), die so konfiguriert ist, dass einen Vorgang zum Eingeben einer Charakteristik des lichtemittierenden Bereichs (SC) im Voraus daran durchgeführt werden kann, wobei
die Aktualisierungseinheit (98) konfiguriert ist, um im Voraus eine Vielzahl der Berechnungsformeln in Übereinstimmung mit der Charakteristik zu speichern, und den Korrekturkoeffizienten unter Verwendung der Berechnungsformel aktualisiert, die der Charakteristik zugeordnet ist, die in die erste Betriebseinheit (10) eingegeben wird.

5. Zweidimensionale kolorimetrische Vorrichtung (1) nach einem der Ansprüche 1 bis 4, weiter umfassend:

eine zweite Betriebseinheit (10), die so konfiguriert ist, dass ein Vorgang des Auswählens einer der ersten Korrektur und der zweiten Korrektur im Voraus als eine von der Korrektureinheit (96) auszuführende Korrektur, wenn die Bestimmungseinheit (94) bestimmt, dass sich der lichtemittierende Bereich (SC) in dem dunklen Zustand befindet, daran durchgeführt werden kann, wobei
die Korrektureinheit (96) konfiguriert ist, um die erste Korrektur auszuführen, wenn die Bestimmungseinheit (94) bestimmt, dass sich der lichtemittierende Bereich (SC) in einem Zustand, in dem die zweite Betriebseinheit (10) betrieben wurde und die erste Korrektur ausgewählt ist, im Dunkelzustand befindet,

und die zweite Korrektur auszuführen, wenn die Bestimmungseinheit (94) bestimmt, dass sich der lichtemittierende Bereich (SC) in einem Zustand, in dem die zweite Betriebseinheit (10) betrieben wurde und die zweite Korrektur ausgewählt ist, im dunklen Zustand befindet.

6. Zweidimensionale kolorimetrische Vorrichtung (1) nach einem der Ansprüche 1 bis 5, wobei
die Bestimmungseinheit (94) konfiguriert ist, um als den Indexwert in einer aktuellen Runde der kolorimetrischen Messung die Belichtungszeit einzustellen, wenn die Abbildungseinheit (7) das Farbbild des lichtemittierenden Bereichs (SC) in der aktuellen Runde der kolorimetrischen Messung aufnimmt, und zu bestimmen, dass sich der lichtemittierende Bereich (SC) im hellen Zustand befindet, wenn die Belichtungszeit gleich oder kürzer als der vorbestimmte Wert ist, und bestimmt, dass sich der lichtemittierende Bereich (SC) im dunklen Zustand befindet, wenn die Belichtungszeit länger als der vorbestimmte Wert ist.

7. Zweidimensionale kolorimetrische Vorrichtung (1) nach einem der Ansprüche 1 bis 5, wobei

die zweite Berechnungseinheit (92) konfiguriert ist, um das Signal, das die Farbe des vorbestimmten Messpunkts (P2) anzeigt, zu verwenden, um eine Leuchtdichte des vorbestimmten Messpunkts (P2) zu berechnen, wobei das Signal, das die Farbe des vorbestimmten Messpunkts (P2) anzeigt, von der optischen Sensoreinheit (8) ausgegeben wird,
die Bestimmungseinheit (94) konfiguriert ist, um als den Indexwert in einer aktuellen Runde der kolorimetrischen Messung die von der zweiten Berechnungseinheit (92) in der aktuellen Runde der kolorimetrischen Messung berechnete Leuchtdichte einzustellen, und zu bestimmen, dass sich der lichtemittierende Bereich (SC) in dem hellen Zustand befindet, wenn die Leuchtdichte gleich oder höher als der vorbestimmte Wert ist, und bestimmt, dass sich der lichtemittierende Bereich (SC) in dem dunklen Zustand befindet, wenn die Leuchtdichte niedriger als der vorbestimmte Wert ist, und
die Bestimmungseinheit (94) konfiguriert ist, um, wenn sie bestimmt, dass sich der lichtemittierende Bereich (SC) in der aktuellen Runde der kolorimetrischen Messung in dem dunklen Zustand befindet, als den Indexwert in einer nächsten Runde der kolorimetrischen Messung die Belichtungszeit einzustellen, wenn die Abbildungseinheit (7) das Farbbild des lichtemittierenden Bereichs (SC) in der nächsten Runde der kolorimetrischen Messung aufnimmt, und zu bestimmen, dass sich der lichtemittierende Bereich (SC) im hellen Zustand befindet, wenn die Belichtungszeit gleich oder kürzer als der vorbestimmte Wert ist, und bestimmt, dass sich der lichtemittierende Bereich (SC) im dunklen Zustand befindet, wenn die Belichtungszeit länger als der vorbestimmte Wert ist.

8.  Zweidimensionale kolorimetrische Vorrichtung (1) nach einem der Ansprüche 1 bis 7, weiter umfassend:

    eine optische Teilereinheit (6), die konfiguriert ist, um Licht aus dem lichtemittierenden Bereich (SC) in zwei Teile zu teilen,
    wobei
    die Abbildungseinheit (7) entlang eines optischen Pfades eines Teils des zweigeteilten Lichts angeordnet ist, und die optische Sensoreinheit (8) entlang eines optischen Pfades des anderen Teils des zweigeteilten Lichts angeordnet ist.

9.  Zweidimensionales kolorimetrisches Messverfahren, bei dem eine zweidimensionale kolorimetrische Vorrichtung (1) umfasst: eine Abbildungseinheit (7), die ein zweidimensionales Abbildungselement (72) einschließt und ein Farbbild eines lichtemittierenden Bereichs (SC) aufnimmt, der zweidimensional ist und ein Messziel darstellt; und eine optische Sensoreinheit (8), die Licht von einem vorbestimmten Messpunkt (P2), der in dem lichtemittierenden Bereich (SC) eingeschlossen ist, empfängt und ein Signal ausgibt, das eine Farbe des vorbestimmten Messpunkts (P2) anzeigt, verwendet wird, wobei das zweidimensionale kolorimetrische Messverfahren umfasst:

    einen ersten Schritt des Verwendens eines Signals, das das Farbbild des lichtemittierenden Bereichs (SC) anzeigt, um Tristimuluswerte von jedem einer Vielzahl von Messpunkten (P1) zu berechnen, die in dem lichtemittierenden Bereich (SC) eingeschlossen sind, wobei das Signal, das das Farbbild des lichtemittierenden Bereichs (SC) anzeigt, von der Abbildungseinheit (7) ausgegeben wird;
    einen zweiten Schritt des Verwendens des Signals, das die Farbe des vorbestimmten Messpunkts (P2) anzeigt, um Tristimuluswerte des vorbestimmten Messpunkts (P2) zu berechnen, wobei das Signal, das die Farbe des vorbestimmten Messpunkts (P2) anzeigt, von der optischen Sensoreinheit (8) ausgegeben wird;
    einen dritten Schritt des Unterscheidens zwischen einem hellen Zustand des lichtemittierenden Bereichs (SC) und einem dunklen Zustand des lichtemittierenden Bereichs (SC), indem als Maßstab ein Fall verwendet wird, in dem ein Indexwert, der eine Helligkeit des lichtemittierenden Bereichs (SC) anzeigt, gleich einem vorbestimmten Wert ist, und der Indexwert verwendet wird, um zu bestimmen, ob der lichtemittierende Bereich (SC) in dem hellen Zustand oder dem dunklen Zustand ist; und
    einen vierten Schritt des Ausführens einer ersten Korrektur, wenn im dritten Schritt bestimmt wird, dass der lichtemittierende Bereich (SC) in dem hellen Zustand ist, und des Ausführens einer zweiten Korrektur, wenn im dritten Schritt bestimmt wird, dass der lichtemittierende Bereich (SC) in dem dunklen Zustand ist, wobei die erste Korrektur eine Korrektur ist, bei der die Tristimuluswerte jedes der Vielzahl von Messpunkten (P1), die durch den ersten Schritt berechnet wurden, unter Verwendung der Tristimuluswerte des vorbestimmten Messpunkts (P2), die durch den zweiten Schritt berechnet wurden, korrigiert werden, wobei die zweite Korrektur eine Korrektur ist, bei der die Tristimuluswerte jedes der Vielzahl von Messpunkten (P1), die durch den ersten Schritt berechnet wurden, unter Verwendung eines vorbestimmten Korrekturkoeffizienten korrigiert werden.

## Revendications

1.  Dispositif (1) de mesure de couleur bidimensionnel comprenant :

    une unité d'imagerie (7) qui inclut un élément (72) d'imagerie bidimensionnel et configurée pour prendre une image en couleur d'une zone (SC) d'émission de lumière qui est bidimensionnelle et est une cible de mesure ;
    une unité (8) formant capteur optique configurée pour recevoir une lumière provenant d'un point de mesure prédéterminé (P2) inclus dans la zone (SC) d'émission de lumière et pour délivrer un signal indiquant une couleur du point de mesure prédéterminé (P2) ;
    une première unité de calcul (91) configurée pour utiliser un signal indiquant l'image en couleur de la zone (SC) d'émission de lumière afin de calculer des valeurs trichromatiques de chaque point d'une pluralité de points de mesure (P1) inclus dans la zone (SC) d'émission de lumière, le signal indiquant l'image en couleur de la zone (SC) d'émission de lumière qui est délivrée par l'unité d'imagerie (7) ;
    une deuxième unité de calcul (92) configurée pour utiliser le signal indiquant la couleur du point de mesure prédéterminé (P2) afin de calculer des valeurs trichromatiques du point de mesure prédéterminé (P2), le signal indiquant la couleur du point de mesure prédéterminé (P2) qui est délivré par l'unité (8) formant capteur optique ;
    une unité de détermination (94) configurée pour faire une distinction entre un état lumineux de la zone (SC) d'émission de lumière et un état sombre de la zone (SC) d'émission de lumière en utilisant, en tant qu'indicateur, un cas dans lequel une valeur d'indice indique qu'une luminosité de la zone (SC) d'émission de lumière est égale à une valeur prédéterminée, et utilise la valeur d'indice pour déterminer si la zone (SC) d'émission de lumière est dans l'état lumineux ou dans l'état sombre ;

une unité de stockage (95) configurée pour stocker à l'avance un coefficient de correction prédéterminé ; et

une unité de correction (96) configurée pour exécuter une première correction lorsque l'unité de détermination (94) détermine que la zone (SC) d'émission de lumière est dans l'état lumineux et pour exécuter une deuxième correction lorsque l'unité de détermination (94) détermine que la zone (SC) d'émission de lumière est dans l'état sombre, la première correction étant une correction dans laquelle les valeurs trichromatiques de chaque point de la pluralité de points de mesure (P1), qui ont été calculées par la première unité de calcul (91), sont corrigées en utilisant les valeurs trichromatiques du point de mesure prédéterminé (P2), qui ont été calculées par la deuxième unité de calcul (92), la deuxième correction étant une correction dans laquelle les valeurs trichromatiques de chaque point de la pluralité de points de mesure (P1), qui ont été calculées par la première unité de calcul (91), sont corrigées en utilisant le coefficient de correction stocké dans l'unité de stockage (95).

2. Dispositif de mesure de couleur bidimensionnel (1) selon la revendication 1, dans lequel

l'unité de stockage (95) est configurée pour stocker à l'avance une pluralité des valeurs d'indice et une pluralité des coefficients de correction associés aux valeurs d'indice respectives de la pluralité de valeurs d'indice, la pluralité de valeurs d'indice présentant des valeurs différentes les unes des autres, et

l'unité de correction (96) est configurée pour exécuter, lorsque l'unité de détermination (94) détermine que la zone (SC) d'émission de lumière est dans l'état sombre, la deuxième correction en utilisant le coefficient de correction associé à la valeur d'indice ayant été utilisée pour mettre en oeuvre la détermination.

3. Dispositif de mesure de couleur bidimensionnel (1) selon la revendication 2, comprenant en outre :

une troisième unité (97) de calcul configurée pour calculer, lorsque l'unité de détermination (94) détermine que la zone (SC) d'émission de lumière est dans l'état lumineux, le coefficient de correction associé à la valeur d'indice ayant été utilisée pour mettre en oeuvre la détermination ; et

une unité (98) de mise à jour configurée pour stocker à l'avance une formule de calcul pour calculer une valeur mise à jour du coefficient de correction, utilise le coefficient de correction calculé par la troisième unité (97) de calcul pour recalculer la formule de calcul, utilise la formule de calcul recalculée pour calculer des valeurs mises à jour de la pluralité de coefficients de correction, et définit, en tant que valeurs mises à jour, la pluralité de coefficients de correction stockés à l'avance dans l'unité de stockage (95).

4. Dispositif de mesure de couleur bidimensionnel (1) selon la revendication 3, comprenant en outre :

une première unité (10) d'opération configurée de sorte qu'une opération d'entrée d'une caractéristique de la zone (SC) d'émission de lumière à l'avance puisse être mise en oeuvre sur celle-ci,

dans lequel

l'unité (98) de mise à jour est configurée pour stocker à l'avance une pluralité des formules de calcul conformément à la caractéristique et met à jour le coefficient de correction en utilisant la formule de calcul associée à la caractéristique entrée dans la première unité (10) d'opération.

5. Dispositif de mesure de couleur bidimensionnel (1) selon l'une quelconque des revendications 1 à 4, comprenant en outre :

une deuxième unité (10) d'opération configurée de sorte qu'une opération, consistant à sélectionner l'une de la première correction et de la deuxième correction à l'avance en tant que correction à exécuter par l'unité de correction (96) lorsque l'unité de détermination (94) détermine que la zone (SC) d'émission de lumière est dans l'état sombre, puisse être mise en oeuvre sur celle-ci,

dans lequel

l'unité de correction (96) est configurée pour exécuter la première correction lorsque l'unité de détermination (94) détermine que la zone (SC) d'émission de lumière est dans l'état sombre dans un état dans lequel la deuxième unité (10) d'opération a été actionnée et la première correction est sélectionnée, et exécute la deuxième correction lorsque l'unité de détermination (94) détermine que la zone (SC) d'émission de lumière est dans l'état sombre dans un état dans lequel la deuxième unité (10) d'opération a été actionnée et la deuxième correction est sélectionnée.

6. Dispositif de mesure de couleur bidimensionnel (1) selon l'une quelconque des revendications 1 à 5, dans lequel l'unité de détermination (94) est configurée pour définir, en tant que valeur d'indice dans un cycle actuel de mesure de couleur, le temps d'exposition lorsque l'unité d'imagerie (7) prend l'image couleur de la zone (SC) d'émission de lumière dans le cycle actuel de mesure de couleur, et déterminer que la zone (SC) d'émission de lumière est dans l'état lumineux lorsque le temps d'exposition est égal ou inférieur à la valeur prédéterminée et détermine que la zone (SC) d'émission de lumière est dans l'état sombre lorsque le temps d'exposition est supérieur à la valeur prédéterminée.

7. Dispositif de mesure de couleur bidimensionnel (1) selon l'une quelconque des revendications 1 à 5, dans lequel

la deuxième unité de calcul (92) est configurée pour utiliser le signal indiquant la couleur du point de mesure prédéterminé (P2) pour calculer une luminance du point de mesure prédéterminé (P2), le signal indiquant la couleur du point de mesure prédéterminé (P2) étant délivré à partir de l'unité (8) formant capteur optique, l'unité de détermination (94) est configurée pour définir, en tant que valeur d'indice dans un cycle actuel de mesure de couleur, la luminance calculée par la deuxième unité de calcul (92) dans le cycle actuel de mesure de couleur, et déterminer que la zone (SC) d'émission de lumière est dans l'état lumineux lorsque la luminance est égale ou supérieure à la valeur prédéterminée et détermine que la zone (SC) d'émission de lumière est dans l'état sombre lorsque la luminance est inférieure à la valeur prédéterminée, et l'unité de détermination (94) est configurée pour définir, lorsqu'il est déterminé que la zone (SC) d'émission de lumière est dans l'état sombre dans le cycle actuel de mesure de couleur, en tant que valeur d'indice dans un cycle suivant de mesure de couleur, le temps d'exposition lorsque l'unité d'imagerie (7) prend l'image en couleur de la zone (SC) d'émission de lumière dans le cycle suivant de mesure de couleur, et déterminer que la zone (SC) d'émission de lumière est dans l'état lumineux lorsque le temps d'exposition est égal ou inférieur à la valeur prédéterminée et détermine que la zone (SC) d'émission de lumière est dans l'état sombre lorsque le temps d'exposition est supérieur à la valeur prédéterminée.

8. Dispositif (1) de mesure de couleur bidimensionnel selon l'une quelconque des revendications 1 à 7, comprenant en outre :

une unité (6) de division optique configurée pour diviser en deux une lumière de la zone (SC) d'émission de lumière, dans lequel l'unité d'imagerie (7) est disposée le long d'un chemin optique d'une partie de la lumière divisée en deux, et l'unité (8) formant capteur optique est disposée le long d'un chemin optique de l'autre partie de la lumière divisée en deux.

9. Procédé de mesure de couleur bidimensionnel dans lequel un dispositif (1) de mesure de couleur bidimensionnel comprend : une unité d'imagerie (7) qui inclut un élément (72) d'imagerie bidimensionnel et prend une image en couleur d'une zone (SC) d'émission de lumière qui est bidimensionnelle et est une cible de mesure ; et une unité (8) formant capteur optique qui reçoit une lumière d'un point de mesure prédéterminé (P2) inclus dans la zone (SC) d'émission de lumière et délivre un signal indiquant qu'une couleur du point de mesure prédéterminé (P2) est utilisée, le procédé de mesure de couleur bidimensionnel comprenant :

une première étape consistant à utiliser un signal indiquant l'image en couleur de la zone (SC) d'émission de lumière pour calculer des valeurs trichromatiques de chacun d'une pluralité de points de mesure (P1) inclus dans la zone (SC) d'émission de lumière, le signal indiquant l'image en couleur de la zone (SC) d'émission de lumière étant délivré à partir de l'unité d'imagerie (7) ; une deuxième étape consistant à utiliser le signal indiquant la couleur du point de mesure prédéterminé (P2) pour calculer des valeurs trichromatiques du point de mesure prédéterminé (P2), le signal indiquant la couleur du point de mesure prédéterminé (P2) étant délivré à partir de l'unité (8) formant capteur optique ; une troisième étape consistant à faire une distinction entre un état lumineux de la zone (SC) d'émission de lumière et un état sombre de la zone (SC) d'émission de lumière en utilisant, en tant qu'indicateur, un cas dans lequel une valeur d'indice indique qu'une luminosité de la zone (SC) d'émission de lumière est égale à une valeur prédéterminée, et à utiliser la valeur d'indice pour déterminer si la zone (SC) d'émission de lumière est dans l'état lumineux ou dans l'état sombre ; et une quatrième étape consistant à exécuter une première correction lorsque la troisième étape détermine que la zone (SC) d'émission de lumière est dans l'état lumineux et à exécuter une deuxième correction lorsque la troisième étape détermine que la zone (SC) d'émission de lumière est dans l'état sombre, la première correction étant une correction dans laquelle les valeurs trichromatiques de chaque point de la pluralité de points de mesure (P1), qui ont été calculées par la première étape, sont corrigées en utilisant les valeurs trichromatiques du point de mesure prédéterminé (P2), qui ont été calculées par la deuxième étape, la deuxième correction étant une correction dans laquelle les valeurs trichromatiques de chaque point de la pluralité de points de mesure (P1), qui ont été calculées par la première étape, sont corrigées en utilisant un coefficient de correction prédéterminé.

# FIG. 1

## FIG. 2

LIGHT-RECEIVING PART (2)

IMAGING UNIT (7)
- TWO-DIMENSIONAL IMAGING ELEMENT (72)
- RGB COLOR FILTERS (71)

6

OPTICAL SENSOR UNIT (8)

IMAGING OPTICAL SYSTEM (5)

SCREEN OF LIQUID CRYSTAL DISPLAY (TWO-DIMENSIONAL LIGHT-EMITTING REGION) (SC)

L1, L2, L, SG1 (12), SG2 (13)

MAIN BODY PART (3)

CONTROL AND PROCESSING UNIT (9)
- FIRST CALCULATION UNIT (91)
- SECOND CALCULATION UNIT (92)
- EXPOSURE CONTROL UNIT (93)
- DETERMINATION UNIT (94)
- STORAGE UNIT (95)
- CORRECTION UNIT (96)
- THIRD CALCULATION UNIT (97)
- UPDATE UNIT (98)

INPUT UNIT (10)

OUTPUT UNIT (11)

1

EP 3 415 883 B1

30

# FIG. 3

# FIG. 4

|  | EXPOSURE TIME | CORRECTION COEFFICIENTS (INITIAL VALUES) |
|---|---|---|
| FIRST CORRECTION (BRIGHT STATE) | T1 | C1-0 |
|  | T2 | C2-0 |
| SECOND CORRECTION (DARK STATE) | T3 | C3-0 |
|  | T4 | C4-0 |

T1<T2<T3<T4

# FIG. 5

| | LUMINANCE | CORRECTION COEFFICIENTS (INITIAL VALUES) |
|---|---|---|
| FIRST CORRECTION (BRIGHT STATE) | Y1 | C5-0 |
| | Y2 | C6-0 |
| SECOND CORRECTION (DARK STATE) | Y3 | C7-0 |
| | Y4 | C8-0 |

Y1>Y2>Y3>Y4

## FIG. 6

# FIG. 7

# FIG. 8

# FIG. 9

# FIG. 10

| | EXPOSURE TIME | CORRECTION COEFFICIENTS (UPDATED VALUES) |
|---|---|---|
| FIRST CORRECTION (BRIGHT STATE) | T1 | C1-1 |
| | T2 | C2-1 |
| SECOND CORRECTION (DARK STATE) | T3 | C3-1 |
| | T4 | C4-1 |

T1<T2<T3<T4

# FIG. 11

|  | LUMINANCE | CORRECTION COEFFICIENTS (UPDATED VALUES) |
|---|---|---|
| FIRST CORRECTION (BRIGHT STATE) | Y1 | C5-1 |
|  | Y2 | C6-1 |
| SECOND CORRECTION (DARK STATE) | Y3 | C7-1 |
|  | Y4 | C8-1 |

Y1>Y2>Y3>Y4

# FIG. 12

START

IMAGING UNIT TAKES COLOR IMAGE OF ENTIRETY OF SCREEN — S1

RECEIVE SIGNAL INDICATING COLOR IMAGE — S2

MEASURE EXPOSURE TIME — S3

CALCULATE TRISTIMULUS VALUES OF EACH OF A PLURALITY OF MEASUREMENT POINTS — S4

SCREEN IN BRIGHT STATE OR DARK STATE? — S5

DARK STATE

BRIGHT STATE

OPTICAL SENSOR UNIT GENERATES SIGNAL INDICATING COLOR OF PREDETERMINED MEASUREMENT POINT — S6

RECEIVE SIGNAL INDICATING COLOR OF PREDETERMINED MEASUREMENT POINT — S7

CALCULATE TRISTIMULUS VALUES OF PREDETERMINED MEASUREMENT POINT — S8

UPDATE CORRECTION COEFFICIENTS — S9

SPECIFY CORRECTION COEFFICIENT — S12

FIRST CORRECTION — S10

SECOND CORRECTION — S13

OUTPUT CORRECTED VALUES — S11

OUTPUT CORRECTED VALUES — S14

END

# FIG. 13

|  | EXPOSURE TIME | CORRECTION COEFFICIENTS (UPDATED VALUES) |
|---|---|---|
| FIRST CORRECTION (BRIGHT STATE) | T1 | C1-2 |
|  | T2 | C2-2 |
| SECOND CORRECTION (DARK STATE) | T3 | C3-2 |
|  | T4 | C4-2 |

T1<T2<T3<T4

# FIG. 14

START

OPTICAL SENSOR UNIT GENERATES
SIGNAL INDICATING COLOR OF
PREDETERMINED MEASUREMENT POINT — S31

RECEIVE SIGNAL INDICATING COLOR OF
PREDETERMINED MEASUREMENT POINT — S32

CALCULATE LUMINANCE OF
PREDETERMINED MEASUREMENT POINT — S33

SCREEN IN
BRIGHT STATE OR
DARK STATE? — S34

BRIGHT STATE

DARK STATE

S35
UPDATE CORRECTION
COEFFICIENTS

S36
CALCULATE TRISTIMULUS
VALUES OF PREDETERMINED
MEASUREMENT POINT

S37
IMAGING UNIT TAKES
COLOR IMAGE OF
ENTIRETY OF SCREEN

S38
RECEIVE SIGNAL
INDICATING COLOR IMAGE

S39
CALCULATE TRISTIMULUS
VALUES OF
EACH OF A PLURALITY OF
MEASUREMENT POINTS

S40
FIRST CORRECTION

S41
OUTPUT
CORRECTED VALUES

S42
SPECIFY
CORRECTION COEFFICIENT

S43
IMAGING UNIT TAKES
COLOR IMAGE OF
ENTIRETY OF SCREEN

S44
RECEIVE SIGNAL
INDICATING COLOR IMAGE

S45
CALCULATE TRISTIMULUS
VALUES OF
EACH OF A PLURALITY OF
MEASUREMENT POINTS

S46
SECOND CORRECTION

S47
OUTPUT
CORRECTED VALUES

END

# FIG. 15

| | EXPOSURE TIME | CCFL CORRECTION COEFFICIENTS (INITIAL VALUES) | O-LED CORRECTION COEFFICIENTS (INITIAL VALUES) |
|---|---|---|---|
| FIRST CORRECTION (BRIGHT STATE) | T1 | D1-0 | E1-0 |
| | T2 | D2-0 | E2-0 |
| SECOND CORRECTION (DARK STATE) | T3 | D3-0 | E3-0 |
| | T4 | D4-0 | E4-0 |

$T1 < T2 < T3 < T4$

# FIG. 16

| | LUMINANCE | CCFL CORRECTION COEFFICIENTS (INITIAL VALUES) | O-LED CORRECTION COEFFICIENTS (INITIAL VALUES) |
|---|---|---|---|
| FIRST CORRECTION (BRIGHT STATE) | Y1 | D5-0 | E5-0 |
| | Y2 | D6-0 | E6-0 |
| SECOND CORRECTION (DARK STATE) | Y3 | D7-0 | E7-0 |
| | Y4 | D8-0 | E8-0 |

Y1>Y2>Y3>Y4

# FIG. 17

| | EXPOSURE TIME | DISTANCE L1 CORRECTION COEFFICIENTS (INITIAL VALUES) | DISTANCE L2 CORRECTION COEFFICIENTS (INITIAL VALUES) | DISTANCE L3 CORRECTION COEFFICIENTS (INITIAL VALUES) |
|---|---|---|---|---|
| FIRST CORRECTION (BRIGHT STATE) | T1 | F1-0 | G1-0 | H1-0 |
| | T2 | F2-0 | G2-0 | H2-0 |
| SECOND CORRECTION (DARK STATE) | T3 | F3-0 | G3-0 | H3-0 |
| | T4 | F4-0 | G4-0 | H4-0 |

T1<T2<T3<T4

# FIG. 18

| | LUMINANCE | DISTANCE L1 CORRECTION COEFFICIENTS (INITIAL VALUES) | DISTANCE L2 CORRECTION COEFFICIENTS (INITIAL VALUES) | DISTANCE L3 CORRECTION COEFFICIENTS (INITIAL VALUES) |
|---|---|---|---|---|
| FIRST CORRECTION (BRIGHT STATE) | Y1 | F5-0 | G5-0 | H5-0 |
| | Y2 | F6-0 | G6-0 | H6-0 |
| SECOND CORRECTION (DARK STATE) | Y3 | F7-0 | G7-0 | H7-0 |
| | Y4 | F8-0 | G8-0 | H8-0 |

Y1>Y2>Y3>Y4

**EP 3 415 883 B1**

**REFERENCES CITED IN THE DESCRIPTION**

**Patent documents cited in the description**

- JP 3246021 B
- JP 4800591 B
- WO 2015182571 A1
- US 2014300753 A1
- JP 4371243 B
- WO 2010021258 A1